(19) Europäisches Patentamt
European Patent Office
Office européen des brevets

(11) **EP 4 228 365 A1**

(12) **EUROPEAN PATENT APPLICATION**
published in accordance with Art. 153(4) EPC

(43) Date of publication:
**16.08.2023 Bulletin 2023/33**

(21) Application number: **21888502.8**

(22) Date of filing: **29.10.2021**

(51) International Patent Classification (IPC):
***H04W 72/12*** (2023.01)

(52) Cooperative Patent Classification (CPC):
**H04W 72/12**

(86) International application number:
**PCT/CN2021/127605**

(87) International publication number:
**WO 2022/095805 (12.05.2022 Gazette 2022/19)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **09.11.2020 CN 202011238334**

(71) Applicant: **Huawei Technologies Co., Ltd.
Shenzhen, Guangdong 518129 (CN)**

(72) Inventors:
• **CHEN, Xiang**
**Shenzhen, Guangdong 518129 (CN)**
• **LI, Yue**
**Shenzhen, Guangdong 518129 (CN)**
• **BAI, Bo**
**Shenzhen, Guangdong 518129 (CN)**
• **ZHANG, Gong**
**Shenzhen, Guangdong 518129 (CN)**

(74) Representative: **MERH-IP Matias Erny Reichl
Hoffmann
Patentanwälte PartG mbB
Paul-Heyse-Strasse 29
80336 München (DE)**

(54) **METHOD AND APPARATUS FOR SCHEDULING TERMINALS**

(57)    This application relates to the field of wireless communication technologies, and discloses a terminal scheduling method and apparatus, to reduce interference between terminals. A centralization device determines, based on information of a terminal, mutual interference between a terminal in a first cell and a terminal in a second cell when the terminal in the first cell and the terminal in the second cell are scheduled on a first time-frequency resource; and determines whether the terminal in the first cell and the terminal in the second cell are allowed to be scheduled on the first time-frequency resource. This can reduce strong interference between the terminals.

FIG. 4

**Description**

**CROSS-REFERENCE TO RELATED APPLICATIONS**

This application claims priority to Chinese Patent Application No. 202011238334.4, filed with the China National Intellectual Property Administration on November 9, 2020 and entitled "TERMINAL SCHEDULING METHOD AND APPARATUS", which is incorporated herein by reference in its entirety.

**TECHNICAL FIELD**

Embodiments of this application relate to the field of wireless communication technologies, and in particular, to a terminal scheduling method and apparatus.

**BACKGROUND**

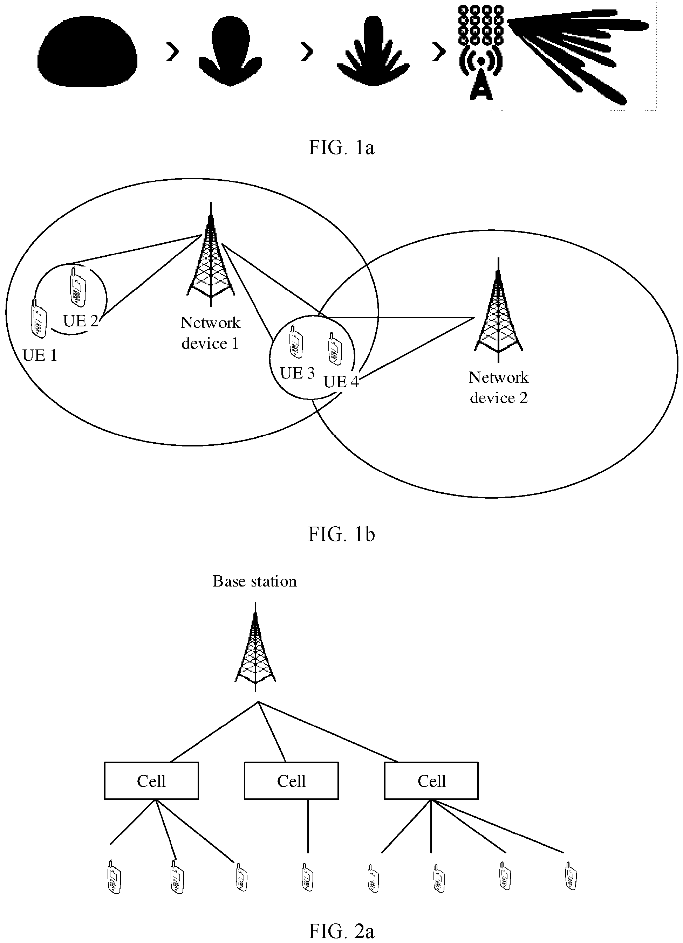

In a current communication system, mutual interference of radio signals between terminals in inter-cells and terminals in a cell has always been a major problem that limits spectral efficiency of the current communications system. For example, in a 5G massive MIMO system, beamforming (FIG. 1a is a schematic diagram of beamforming) is used to reduce interference between data streams, multiplex one time-frequency resource in different spaces (that is, a spatial multiplexing technology), and greatly improve a system capacity. A larger quantity of antennas indicate narrower beams, more concentrated energy, and more terminals that can be simultaneously served through spatial multiplexing on a same time-frequency resource. Because beam energy is more concentrated, although interference to a terminal in a neighboring cell outside a beam direction is weaker, downlink interference to a plurality of terminals in a neighboring cell in the beam direction is more severe, and an interfered-with area changes dynamically with different scheduled terminals.

In view of this, how to resolve mutual interference between the plurality of terminals is a technical problem to be resolved.

**SUMMARY**

Embodiments of this application provide a terminal scheduling method and apparatus, to reduce mutual interference between terminals.

According to a first aspect, a terminal scheduling method is provided. A centralization device obtains respective first information of a plurality of terminals. The plurality of terminals include at least one terminal in a first cell and at least one terminal in a second cell. The plurality of terminals are terminals to be scheduled on a first time-frequency resource. The first information is used to determine mutual interference between any two terminals when the two terminals are scheduled on the first time-frequency resource. Then, the centralization device determines, based on mutual interference between a terminal in the first cell and a terminal in the second cell when the terminal in the first cell and the terminal in the second cell are scheduled on the first time-frequency resource, whether the terminal in the first cell and the terminal in the second cell are allowed to be scheduled on the first time-frequency resource.

The centralization device determines, based on interference between the plurality of terminals, whether the plurality of terminals are allowed to be scheduled on a same time-frequency resource. In this way, when the terminals are scheduled, some terminals may be selected and scheduled, and the other terminals may not be scheduled, to avoid interference between the terminals.

In a possible implementation, the centralization device may first group the plurality of terminals based on mutual interference between the plurality of terminals when the plurality of terminals are scheduled on the first time-frequency resource. For any terminal, mutual interference between the terminal and at least one first terminal when the terminal and the at least one first terminal are scheduled on the first time-frequency resource is greater than mutual interference between the terminal and a second terminal when the terminal and the second terminal are scheduled on the first time-frequency resource. The terminal and the first terminal belong to a same group. The terminal and the second terminal belong to different groups. Next, the centralization device performs the following processing on each group: if the group includes a terminal in only one cell, allowing to schedule the terminal in the cell in the group on the first time-frequency resource, where the cell is the first cell or the second cell; or if the group includes a third terminal in the first cell and a fourth terminal in the second cell, allowing to schedule the third terminal in the first cell in the group on the first time-frequency resource, and disallowing to schedule the fourth terminal in the second cell in the group on the first time-frequency resource; or disallowing to schedule the third terminal in the first cell in the group on the first time-frequency resource, and allowing to schedule the fourth terminal in the second cell in the group on the first time-frequency resource.

In most cases, interference between terminals in one group is strong, and interference between terminals in different groups is weak. When terminals are scheduled, a terminal in only one cell is selected from a group and is allowed to be scheduled, and terminals in another cell are disallowed to be scheduled. In such a selection manner, terminals with strong interference between cells can be prevented from being scheduled simultaneously, to reduce mutual interference between the terminals in the cells.

In a possible implementation, the centralization device sends first indication information to a scheduling device for the first cell, where the first indication information indicates a terminal allowed to be scheduled in the first cell; and/or the centralization device sends the first indication information to a scheduling device for the second cell, where the first indication information indicates a terminal allowed to be scheduled in the second cell.

In a possible implementation, the first indication information further indicates a group to which a terminal allowed to be scheduled belongs. For example, the first indication information includes an identifier of a terminal allowed to be scheduled in a cell and an identifier of a group to which the terminal allowed to be scheduled belongs. The centralization device can further notify a cell-level and coarse-grained scheduling selection result to a scheduling device, so that the scheduling device determines a terminal to be scheduled. This further improves scheduling flexibility.

In a possible implementation, the centralization device selects at least one target terminal from each group of terminals allowed to be scheduled. Then, the centralization device sends second indication information to a scheduling device for the first cell, where the second indication information indicates to schedule a target terminal in the first cell; and/or the centralization device sends the second indication information to a scheduling device for the second cell, where the second indication information indicates to schedule a target terminal in the second cell. In most cases, interference between terminals in one group is strong, and interference between terminals in different groups is weak. When terminals are scheduled, some target terminals are selected from a group and are scheduled, and the other terminals are not scheduled. In such a selection manner, terminals with strong interference can be prevented from being scheduled simultaneously to some extent, to reduce mutual interference between the terminals.

In a possible implementation, the centralization device selects, based on a scheduling priority of each terminal allowed to be scheduled, the at least one target terminal from each group of terminals allowed to be scheduled. Generally, the target terminal is a terminal with a highest or higher scheduling priority in a group to which the target terminal belongs.

In a possible implementation, the second indication information further indicates a second time-frequency resource corresponding to each target terminal. The second time-frequency resource is a portion of or all of the first time-frequency resource. A plurality of target terminals in one group respectively correspond to different second time-frequency resources. A different second time-frequency resource is allocated to each target terminal, to perform scheduling. In this way, even if a plurality of target terminals are scheduled, no interference is generated during scheduling because time-frequency resources corresponding to the target terminals are different.

In a possible implementation, the first information includes but is not limited to one or more of the following: a channel state, beam signal strength, a received signal strength indicator, reference signal received power, reference signal received quality, an identifier of a beam whose signal strength is greater than or equal to a specified threshold, or an identifier of the beam whose signal strength is less than or equal to the specified threshold.

In a possible implementation, the first information further includes a scheduling priority.

According to a second aspect, a terminal scheduling method is provided. A scheduling device receives first indication information from a centralization device. The first indication information indicates terminals allowed to be scheduled and a group to which the terminals allowed to be scheduled belong. The scheduling device selects, from the terminals allowed to be scheduled, one or more terminals as target terminals, and schedules the target terminals.

The scheduling device receives a cell-level and coarse-grained scheduling selection result from the centralization device, so that the scheduling device determines a terminal to be scheduled in a cell. This further improves scheduling flexibility.

In a possible implementation, when there are a plurality of target terminals, the plurality of target terminals belong to different groups. In other words, for a cell, one terminal in only the cell is allowed to be scheduled in a group. In this way, terminals with strong interference can be prevented from being scheduled simultaneously, to reduce mutual interference between the terminals.

In a possible implementation, in a group, a terminal with a highest scheduling priority in scheduled terminals is allowed to be the target terminal.

According to a third aspect, a terminal scheduling method is provided. A centralization device obtains respective first information of a plurality of terminals. The plurality of terminals include at least one terminal in a first cell and at least one terminal in a second cell. The plurality of terminals are terminals to be scheduled on a first time-frequency resource. The first information is used to determine mutual interference between any two terminals when the two terminals are scheduled on the first time-frequency resource. Then, the centralization device determines, based on mutual interference between a terminal in the first cell and a terminal in the second cell when the terminal in the first cell and the terminal in the second cell are scheduled on the first time-frequency resource, whether the terminal in the first cell and the terminal in the second cell are scheduled on the first time-frequency resource.

The centralization device determines, based on interference between the plurality of terminals, whether the plurality of terminals are scheduled on a same time-frequency resource. In this way, when the terminals are scheduled, some terminals may be selected and scheduled, and the other terminals may not be scheduled, to avoid interference between the terminals.

In a possible implementation, the centralization device groups the plurality of terminals based on mutual interference between the plurality of terminals when the plurality of terminals are scheduled on the first time-frequency resource. For any terminal, mutual interference between the terminal and at least one first terminal when the terminal and the at least one first terminal are scheduled on the first time-frequency resource is greater than mutual interference between the terminal and a second terminal when the terminal and the second terminal are scheduled on the first time-frequency resource. The terminal and the first terminal belong to a same group. The terminal and the second terminal belong to different groups. Then, the centralization device selects at least one target terminal from each group of terminals.

In most cases, interference between terminals in one group is strong, and interference between terminals in different groups is weak. When terminals are scheduled, some target terminals are selected from a group and are scheduled, and the other terminals are not scheduled. In such a selection manner, terminals with strong interference can be prevented from being scheduled simultaneously to some extent, to reduce mutual interference between the terminals.

In a possible implementation, the centralization device may further send second indication information to a scheduling device for the first cell, where the second indication information indicates to schedule a target terminal in the first cell; and/or the centralization device sends the second indication information to a scheduling device for the second cell, where the second indication information indicates to schedule a target terminal in the second cell.

In a possible implementation, the second indication information further indicates a second time-frequency resource corresponding to each target terminal. The second time-frequency resource is a portion of or all of the first time-frequency resource. A plurality of target terminals in one group respectively correspond to different second time-frequency resources. A different second time-frequency resource is allocated to each target terminal, to perform scheduling. In this way, even if a plurality of target terminals are scheduled, no interference is generated during scheduling because time-frequency resources corresponding to the target terminals are different.

In a possible implementation, the first information includes but is not limited to one or more of the following: a channel state, beam signal strength, a received signal strength indicator, reference signal received power, reference signal received quality, an identifier of a beam whose signal strength is greater than or equal to a specified threshold, or an identifier of the beam whose signal strength is less than or equal to the specified threshold.

In a possible implementation, the first information further includes a scheduling priority.

According to a fourth aspect, a terminal scheduling method is provided. A scheduling device receives second indication information from a centralization device. The second indication information indicates to schedule a target terminal. Then, the scheduling device may schedule the target terminal.

The second indication information may include an identifier of the target terminal, and may further include a scheduling identifier.

According to a fifth aspect, a communication apparatus is provided. The apparatus has a function of implementing any one of the first aspect or the possible implementations of the first aspect, a function of implementing any one of the second aspect or the possible implementations of the second aspect, a function of implementing any one of the third aspect or the possible implementations of the third aspect, or a function of implementing any one of the fourth aspect or the possible implementations of the fourth aspect. The function may be implemented by hardware, or may be implemented by hardware executing corresponding software. The hardware or software includes one or more functional modules corresponding to the foregoing function.

According to a sixth aspect, a communication apparatus is provided, including a processor and a memory. The memory is configured to store computer program instructions. The processor is configured to execute some or all computer program instructions in the memory. When the some or all computer program instructions are executed, the processor is configured to implement a function of a centralization device in the method according to any one of the first aspect or the possible implementations of the first aspect, implement a function of a scheduling device according to any one of the second aspect or the possible implementations of the second aspect, implement a function of a centralization device in the method according to any one of the third aspect or the possible implementations of the third aspect, or implement a function of a scheduling device according to any one of the fourth aspect or the possible implementations of the fourth aspect.

In a possible design, the apparatus may further include a transceiver. The transceiver is configured to send a signal processed by the processor, or receive a signal input to the processor. The transceiver may perform a sending action or a receiving action performed by the centralization device in the method according to any one of the first aspect or the possible implementations of the first aspect, perform a sending action or a receiving action performed by the scheduling device in the method according to any one of the second aspect or the possible implementations of the second aspect, perform a sending action or a receiving action performed by the centralization device in the method according to any one of the third aspect or the possible implementations of the third aspect, or perform a sending action or a receiving action performed by the scheduling device in the method according to any one of the fourth aspect or the possible implementations of the fourth aspect.

According to a seventh aspect, a communication apparatus is provided, including a processor. The processor is configured to execute a computer program or instructions. When the computer program or the instructions are executed, the processor is configured to implement a function of a centralization device in the method according to any one of the first aspect or the possible implementations of the first aspect, implement a function of a scheduling device in the method according to any one of the second aspect or the possible implementations of the second aspect, implement a function of a centralization device in the method according to any one of the third aspect or the possible implementations of the third aspect, or implement a function of a scheduling device in the method according to any one of the fourth aspect or the possible implementations of the fourth aspect. The computer program or the instructions may be stored in the processor or a memory. The memory is coupled to the processor. The memory may be disposed in the communication apparatus, or may not be disposed in the communication apparatus.

In a possible implementation, the apparatus further includes a communication interface. The communication interface is configured to send a signal processed by the processor, or receive a signal input to the processor. The communication interface may perform a sending action or a receiving action performed by a centralization device according to any one of the first aspect or the possible implementations of the first aspect, perform a sending action or a receiving action performed by a scheduling device according to any one of the second aspect or the possible implementations of the second aspect, perform a sending action or a receiving action performed by a centralization device according to any one of the third aspect or the possible implementations of the third aspect, or perform a sending action or a receiving action performed by a scheduling device according to any one of the fourth aspect or the possible implementations of the fourth aspect.

According to an eighth aspect, this application provides a chip system. The chip system includes one or more processors (which may also be referred to as a processing circuit). The processor is electrically coupled to a memory (which may also be referred to as a storage medium). The memory may be disposed in the chip system, or may not be disposed in the chip system. The memory is configured to store computer program instructions. The processor is configured to execute some or all computer program instructions in the memory. When the some or all computer program instructions are executed, the processor is configured to implement a function of a centralization device in the method according to any one of the first aspect or the possible implementations of the first aspect, implement a function of a scheduling device according to any one of the second aspect or the possible implementations of the second aspect, implement a function of a centralization device in the method according to any one of the third aspect or the possible implementations of the third aspect, or implement a function of a scheduling device according to any one of the fourth aspect or the possible implementations of the fourth aspect.

In a possible design, the chip system may further include an input/output interface. The input/output interface is configured to output a signal processed by the processor, or receive a signal input to the processor. The input/output interface may perform a sending action or a receiving action performed by the centralization device in the method according to any one of the first aspect or the possible implementations of the first aspect, perform a sending action or a receiving action performed by the scheduling device in the method according to any one of the second aspect or the possible implementations of the second aspect, perform a sending action or a receiving action performed by the centralization device in the method according to any one of the third aspect or the possible implementations of the third aspect, or perform a sending action or a receiving action performed by the scheduling device in the method according to any one of the fourth aspect or the possible implementations of the fourth aspect.

In a possible design, the chip system may include a chip, or may include the chip and another discrete component.

According to a ninth aspect, a computer-readable storage medium is provided. The computer-readable storage medium is configured to store a computer program. The computer program includes instructions for implementing a function according to any one of the first aspect or the possible implementations of the first aspect, instructions for implementing a function according to any one of the second aspect or the possible implementations of the second aspect, instructions for implementing a function according to any one of the third aspect or the possible implementations of the third aspect, or instructions for implementing a function according to any one of the fourth aspect or the possible implementations of the fourth aspect.

Alternatively, the computer-readable storage medium is configured to store a computer program. When the computer program is executed by a computer, the computer is enabled to perform a method performed by a centralization device in the method according to any one of the first aspect or the possible implementations of the first aspect, perform a method performed by a scheduling device according to any one of the second aspect or the possible implementations of the second aspect, perform a method performed by a centralization device in the method according to any one of the third aspect or the possible implementations of the third aspect, or perform a method performed by a scheduling device according to any one of the fourth aspect or the possible implementations of the fourth aspect.

According to a tenth aspect, a computer program product is provided. The computer program product includes computer program code. When the computer program code is run on a computer, the computer is enabled to perform a method performed by a centralization device according to any one of the first aspect or the possible implementations of the first aspect, perform a method performed by a scheduling device according to any one of the second aspect or the possible implementations of the second aspect, perform a method performed by a centralization device according to any one of the third aspect or the possible implementations of the third aspect, or perform a method performed by a scheduling device according to any one of the fourth aspect or the possible implementations of the fourth aspect.

According to an eleventh aspect, a communication system is provided. The communication system includes the centralization device for performing the method according to any one of the first aspect or the possible implementations of the first aspect and the scheduling device for performing the method according to any one of the second aspect or the possible implementations of the second aspect. Alternatively, the communication system includes the centralization device for performing the method according to any one of the third aspect or the possible implementations of the third aspect and the scheduling device for performing the method according to any one of the fourth aspect or the possible implementations of the fourth aspect.

For technical effect of the fifth aspect to the eleventh aspect, refer to descriptions in the first aspect to the fourth aspect. Details are not described again.

## BRIEF DESCRIPTION OF DRAWINGS

FIG. 1a is a schematic diagram of beamforming according to an embodiment of this application;
FIG. 1b is a schematic diagram of an architecture of a communication system according to an embodiment of this application;
FIG. 2a, FIG. 2b, and FIG. 2c are schematic diagrams of application scenarios according to an embodiment of this application;
FIG. 3 is a schematic diagram of a terminal scheduling process according to an embodiment of this application;
FIG. 4 is a schematic diagram of another terminal scheduling process according to an embodiment of this application;
FIG. 5 is a schematic diagram of grouping according to an embodiment of this application;
FIG. 6 is a schematic diagram of still another terminal scheduling process according to an embodiment of this application;
FIG. 7 is a diagram of a structure of a terminal scheduling apparatus according to an embodiment of this application; and
FIG. 8 is a diagram of a structure of another terminal scheduling apparatus according to an embodiment of this application.

## DESCRIPTION OF EMBODIMENTS

The following describes in detail embodiments of this application with reference to the accompanying drawings.

For ease of understanding the technical solutions in embodiments of this application, the following briefly describes a system architecture of a terminal scheduling method provided in embodiments of this application. It may be understood that the system architecture described in embodiments of this application is intended to describe the technical solutions in embodiments of this application more clearly, and does not constitute a limitation on the technical solutions provided in embodiments of this application.

The technical solutions in embodiments of this application are applicable to various communication systems such as a wireless local area network (wireless local area network, WLAN) communication system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a fifth generation (5th generation, 5G) system or a new radio (new radio, NR), and a future communication system.

For ease of understanding embodiments of this application, the following describes application scenarios of this application. A network architecture and a service scenario described in embodiments of this application are intended to describe the technical solutions in embodiments of this application more clearly, but constitute no limitation on the technical solutions provided in embodiments of this application. A person of ordinary skill in the art may learn that the technical solutions provided in embodiments of this application are also applicable to similar technical problems as a new service scenario emerges.

A communication system shown in FIG. 1b includes a network device and a terminal. The network device and the terminal may perform wireless communication by using an air interface resource. The air interface resource may include one or more of a time domain resource, a frequency domain resource, a code domain resource, and a space domain resource.

When a plurality of terminals served by one network device communicate with the network device, there may be interference between the plurality of terminals. For example, in FIG. 1b, a network device 1 serves UE 1 and UE 2. When the UE 1 and the UE 2 are scheduled on a same time-frequency resource, there may be interference between the UE 1 and the UE 2. For another example, when terminals respectively served by different network devices communicate with respective network devices, there may also be interference between a plurality of terminals. For example, in FIG. 1b, the network device 1 serves UE 3, and a network device 2 serves UE 4. When the UE 3 and the UE 4 are scheduled on a same time-frequency resource due to a location relationship, there may also be interference between the UE 3 and the UE 4. In addition, there are usually one or more cells in a coverage area of the network device, and there are one or more terminals in each cell. Terminals that interfere with each other may be terminals in one cell or terminals in different cells.

To eliminate interference between the terminals, this application provides a plurality of terminal scheduling solutions. A core idea is that: A centralization device determines interference between any two terminals based on information such as a channel state, beam signal strength, a received signal strength indicator, reference signal received power, and reference signal received quality of the terminals. In terminals with interference or strong interference, some terminals are scheduled on a same time-frequency resource, and the other terminals are not scheduled, to reduce interference between the terminals. For example, there is interference or strong interference between any two of a terminal a, a terminal b, and a terminal c. In the three terminals, only one terminal may be scheduled, and the remaining two terminals are not scheduled. For example, only the terminal a is scheduled, and the terminal b and the terminal c are not scheduled. When the terminal a is scheduled, because the terminal b and the terminal c are not scheduled, the terminal b and the terminal c definitely do not interfere with the terminal a. This reduces interference between the terminals.

The scheduling solution in this application is applicable to a plurality of application scenarios. The following describes an association relationship between the centralization device and a scheduling device in different application scenarios. In this application, the scheduling device is a "device that can schedule a terminal", and may also be understood as a "network device that serves a terminal". The following examples are merely used as examples for description, and do not constitute any limitation on this application.

In an example, as shown in FIG. 2a, this application is applicable to a scenario in which there is one base station. The base station has a plurality of cells, that is, interference between terminals served by each base station is considered separately, and is irrelevant to another base station. In this scenario, the centralization device is a base station, and the scheduling device is also the base station.

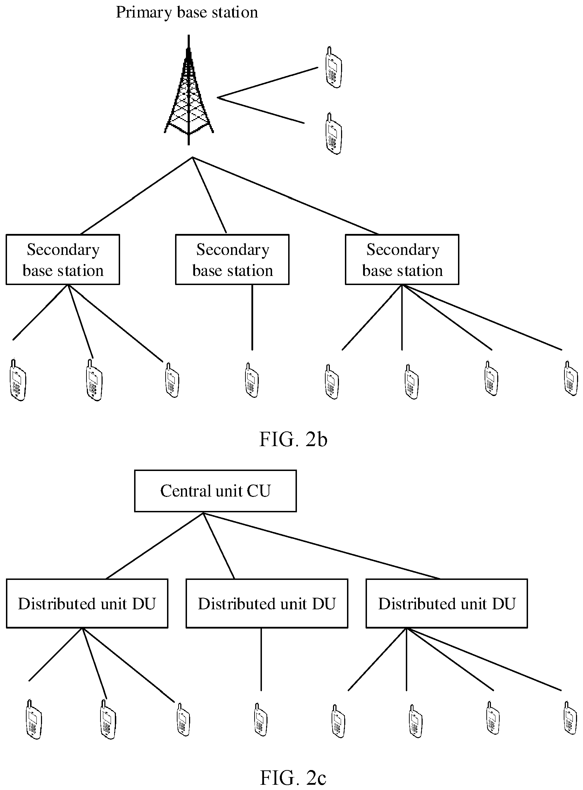

In an example, as shown in FIG. 2b, this application is applicable to a scenario in which there are a plurality of base stations, that is, interference between terminals served by the plurality of base stations is considered comprehensively. In this scenario, the centralization device is a base station, and the scheduling device is another base station. Specifically, as shown in FIG. 2b, in a multi-base station scenario, a primary base station and one or more secondary base stations may form a coordinating cluster. The primary base station may communicate with the secondary base stations through an Xn/X2 interface. The centralization device may be the primary base station, and the scheduling device may be the secondary base station.

In an example, as shown in FIG. 2c, this application is applicable to a scenario in which a CU and a DU are separated. The CU may communicate with the DU in a fronthaul or backhaul manner. The centralization device is the CU, and the scheduling device is the DU. Alternatively, the centralization device is the CU, and the scheduling device is also the CU.

In an example, this application is applicable to a C-RAN architecture scenario. The centralization device may be a BBU, and the scheduling device may be an AAU. Alternatively, the centralization device is a BBU, and the scheduling device is also the BBU.

In an example, this application is also applicable to a multi-AP coordination scenario. The centralization device may be an AP, and the scheduling device may be another AP.

For ease of understanding embodiments of this application, the following describes a part of terms in embodiments of this application, to help a person skilled in the art have a better understanding.

(1) A network device is a device that can provide a random access function for a terminal device or a chip that can be disposed in the device. The device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a femto-cell (for example, a home evolved NodeB, or home NodeB, HNB), a baseband unit (baseband unit, BBU), an access point (access point, AP) in a wireless fidelity (wireless fidelity, Wi-Fi) system, a wireless relay node, a wireless backhaul node, and a transmission point (transmission and reception point, TRP; or transmission point, TP). Alternatively, the device may be a gNB or a transmission point (TRP or TP) in a 5G system such as an NR system, may be an antenna panel or a group of antenna panels (including a plurality of antenna panels) of a base station in a 5G system, or may be a network node, such as a baseband unit (BBU), a central unit (central unit, CU), or a distributed unit (distributed unit, DU), that constitutes a gNB or a transmission point.

(2) A terminal device, also referred to as user equipment (user equipment, UE), a mobile station (mobile station, MS), a mobile terminal (mobile terminal, MT), a terminal, or the like, is a device that provides voice and/or data connectivity for a user. For example, the terminal device includes a handheld device with a wireless connection function, a vehicle-mounted device, and the like. Currently, the terminal device may be a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a wireless terminal in vehicle-to-vehicle (Vehicle-to-Vehicle, V2V) communication, or the like.

The following describes the solutions in detail with reference to the accompanying drawings. Features or content marked by dashed lines in the accompanying drawings may be understood as optional operations or optional structures in embodiments of this application.

In actual application, the solutions in this application may be performed in each scheduling period, and one scheduling period may be, for example, one or more transmission time intervals (transmission time interval, TTI).

In addition, in this application, "allow scheduling" and "allow to be scheduled" have a same meaning; and "scheduling" and "scheduled" also have a same meaning.

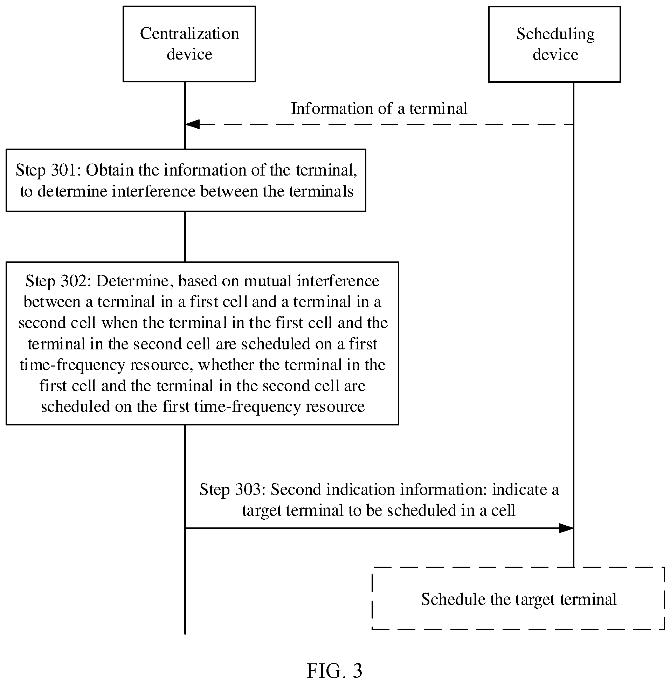

FIG. 3 provides a schematic diagram of a terminal scheduling process. The terminal scheduling process includes the following steps.

Step 301: A centralization device obtains respective first information of a plurality of terminals. The first information is used to determine mutual interference between any two terminals when the two terminals are scheduled on a first time-frequency resource.

The plurality of terminals may belong to a same cell or different cells. For example, there are two cells: a first cell and a second cell. The plurality of terminals may include one or more terminals in the first cell and one or more terminals in the second cell. For example, there are three cells: a first cell, a second cell, and a third cell. The plurality of terminals may include one or more terminals in the first cell, one or more terminals in the second cell, and one or more terminals in the third cell.

The first time-frequency resource in this application may be represented by a quantity of resource elements (resource element, RE), a quantity of precoding resource block groups (precoding resource block group, PRG), a quantity of physical resource blocks (physical resource block, PRB), or a quantity of resource block groups (resource block group, RBG) or subbands (subband or bandwidth part, BWP). The first time-frequency resource may be a scheduling bandwidth in a current scheduling period.

The terminal whose first information is obtained in step 301 is a terminal to be scheduled, and "to be scheduled" may be understood as that data needs to be transmitted between the terminal and a network device. In actual application, there may be a terminal not to be scheduled in each cell, in addition to the terminal to be scheduled.

The first information may include but is not limited to one or more of the following information: channel state information, beam signal strength, a received signal strength indicator (received signal strength indicator, RSSI), reference signal received power (reference signal received power, RSRP), reference signal received quality (reference signal received quality, RSRQ), an identifier of a beam whose signal strength is greater than or equal to a specified threshold, or an identifier of the beam whose signal strength is less than or equal to the specified threshold. The channel state information may be a channel gain matrix, for example, a network device p-to-terminal $i$ channel gain matrix $H_{i,p}$, or a right singular vector $h_{i,p}$ corresponding to a maximum singular value of $H_{i,p}$. $h_{i,p}$ represents a strongest narrow beam direction from the network device p to the terminal $i$. An example of determining, based on the first information, mutual interference between terminals when the terminals are scheduled on the first time-frequency resource is described in detail later.

Optionally, the first information may further include a scheduling priority. The scheduling priority is a ratio of an instantaneous transmission rate of the terminal $i$ to a historical average transmission rate, and may be represented by $p_i$.

The following describes several examples in which the centralization device obtains the first information of the terminal.

In an example, the terminal reports the first information to the centralization device. This example is generally applicable to a scenario, for example, a scenario in FIG. 2a, in which the centralization device and a scheduling device are a same device.

In an example, the terminal reports the first information to a scheduling device, and the scheduling device reports the first information of the terminal to the centralization device. This example is generally applicable to a scenario, for example, scenarios in FIG. 2b and FIG. 2c, in which the centralization device and the scheduling device are not a same device.

In addition, information such as the channel state information, the beam signal strength, the received signal strength indicator RSSI, the reference signal received power RSRP, and the reference signal received quality RSRQ is generally downlink information. The information may be measured by the terminal and reported to the scheduling device (namely, a network device that serves the terminal). Alternatively, the downlink information may be obtained by the scheduling device through reciprocity between uplink and downlink channels after the scheduling device actively measures uplink information.

S302: The centralization device determines, based on mutual interference between a terminal in the first cell and a terminal in the second cell when the terminal in the first cell and the terminal in the second cell are scheduled on the first time-frequency resource, whether the terminal in the first cell and the terminal in the second cell are scheduled on the first time-frequency resource.

In an example, an interference threshold is set, and a terminal to be scheduled on the first time-frequency resource is determined based on the interference threshold. As described above, the first cell includes one or more terminals to be scheduled, and the second cell includes one or more terminals to be scheduled. Any terminal 1 in the first cell and any terminal 2 in the second cell are used as an example to describe a specific example about whether the two terminals are scheduled. When the terminal 1 and the terminal 2 are scheduled on the first time-frequency resource, and mutual interference between the terminal 1 and the terminal 2 is greater than or equal to the interference threshold, it is determined that the terminal 1 and the terminal 2 are not scheduled on the first time-frequency resource. For example, the terminal 1 is scheduled, and the terminal 2 is not scheduled. For another example, the terminal 2 is scheduled, and the terminal 1 is not scheduled. When the terminal 1 and the terminal 2 are scheduled on the first time-frequency resource, and mutual interference between the terminal 1 and the terminal 2 is less than or equal to the interference threshold, it is determined that the terminal 1 and the terminal 2 are scheduled on the first time-frequency resource.

When the plurality of terminals belong to three cells, four cells, or even more cells, whether the terminals are allowed to be scheduled may still be determined based on the interference threshold. For example, for any two terminals, the centralization device may determine, based on mutual interference between the two terminals when the two terminals are scheduled on the first time-frequency resource, whether the two terminals are scheduled on the first time-frequency resource. Further, based on comprehensive consideration of interference between the two terminals, the centralization device may determine, from the plurality of terminals, a terminal to be scheduled on the first time-frequency resource.

In another example, the centralization device determines a group to which each terminal belongs. Specifically, the centralization device groups the plurality of terminals based on mutual interference between the terminal in the first cell and the terminal in the second cell when the terminal in the first cell and the terminal in the second cell are scheduled on the first time-frequency resource. The centralization device determines, based on a grouping status, a terminal to be scheduled on the first time-frequency resource.

When the terminals are grouped, the following grouping characteristics are met: There is one only terminal in one group. In other words, terminals in different groups are different. For any terminal, mutual interference between the terminal and at least one first terminal when the terminal and the at least one first terminal are scheduled on the first time-frequency resource is greater than mutual interference between the terminal and a second terminal when the terminal and the second terminal are scheduled on the first time-frequency resource. The terminal and the first terminal belong to a same group. The terminal and the second terminal belong to different groups. The grouping characteristics may be understood as follows: In most cases, there is strong interference between a plurality of terminals in one group when the terminals are scheduled on a same time-frequency resource, and there is weak interference between a plurality of terminals in different groups when the terminals are scheduled on the same time-frequency resource. In other words, in most cases, mutual interference between a plurality of terminals in one group when the terminals are scheduled on a same time-frequency resource is greater than mutual interference between a plurality of terminals in different groups when the terminals are scheduled on the same time-frequency resource.

It is assumed that there are eight terminals in a cell a that are a terminal a1 to a terminal a8, and there are eight terminals in a cell b that are a terminal b1 to a terminal b8. The 16 terminals are divided into five groups. Details are shown in Table 1.

A first group includes the terminal a1, a terminal a5, and the terminal a8 in the cell a.

A second group includes the terminal b1 and a terminal b2 in the cell b.

A third group includes a terminal a2 and a terminal a6 in the cell a, and a terminal b4 and a terminal b6 in the cell b.

A fourth group includes a terminal a3 in the cell a, and a terminal b3, a terminal b5, and the terminal b8 in the cell b.

A fifth group includes a terminal a4 and a terminal a7 in the cell a, and a terminal b7 in the cell b.

Table 1

| Group | Cell a | Cell b |
|---|---|---|
| First group | a1, a5, and a8 | None |
| Second group | None | b1 and b2 |
| Third group | a2 and a6 | b4 and b6 |
| Fourth group | a3 | b3, b5, and b8 |
| Fifth group | a4 and a7 | b7 |

In Table 1, mutual interference between a plurality of terminals in one group when the terminals are scheduled on the first time-frequency resource is greater than mutual interference between a plurality of terminals in different groups when the terminals are scheduled on the first time-frequency resource. For example, interference between the terminal a1 and the terminal a5 is greater than interference between the terminal a1 and the terminal a2. For another example, interference between the terminal a3 and the terminal b3 is greater than interference between the terminal b3 and the terminal b7.

A specific process of grouping the terminals is described in detail later.

After the terminals are grouped, the centralization device selects at least one target terminal from each group of terminals. The target terminal is a scheduled terminal. In this application, the "scheduled terminal" is defined as a target terminal.

For example, one or more target terminals in one group may be selected based on priorities of all terminals in the group.

For example, only one target terminal is selected from one group. For example, in Table 1, when the centralization device may separately select one terminal from the five groups as the target terminal, the centralization device may select five target terminals.

In an example, the centralization device may select, from a group, a terminal with a highest scheduling priority as the target terminal. In other words, the target terminal is a terminal with the highest scheduling priority in the group to which the target terminal belongs. Alternatively, the target terminal may be determined by considering a global load of a plurality of cells, to achieve an objective of load balancing between the cells. In this example, the centralization device groups a plurality of terminals based on mutual interference between the terminals when the terminals are scheduled on the first time-frequency resource. In most cases, interference between terminals in one group is strong, and interference between terminals in different groups is weak. When terminals are scheduled, only one target terminal is selected from a group and is scheduled, and the other terminals are not scheduled. In such a selection manner, terminals with strong interference can be prevented from being scheduled simultaneously, to reduce mutual interference between the terminals. In addition, when a plurality of terminals belong to a plurality of cells, not only mutual interference between the terminals in a cell but also mutual interference between the terminals in inter-cells can be resolved.

In another example, the first time-frequency resource is greater than a time-frequency resource actually used by the terminal to transmit data. If only one target terminal is scheduled in one group during one scheduling, a resource waste occurs. Based on this, the centralization device may further select, based on a resource size required by each terminal to transmit data, as much as possible, a plurality of terminals to be scheduled on different time-frequency resources. The resource size may be represented by a quantity of resource elements (resource element, RE), a quantity of precoding resource block groups (precoding resource block group, PRG), a quantity of physical resource blocks (physical resource block, PRB), or a resource block group (resource block group, RBG). For example, the first time-frequency resource is 100 PRBs, and one target terminal a may need only 60 PRBs or even less to transmit data. When scheduling the target terminal a, the centralization device may also schedule a target terminal b, and allocate the remaining 40 PRBs to the target terminal b, to improve resource utilization.

Optionally, the first information of the terminal that is obtained by the foregoing centralization device may further include a resource size required by the terminal to transmit data.

For each group, the centralization device may select one or more target terminals from the group based on a resource size required by each terminal in the group to transmit data, and determine a second time-frequency resource corresponding to each target terminal, so that the scheduling device schedules the target terminal on the second time-frequency resource. In one group, different target terminals respectively correspond to different second time-frequency resources. The second time-frequency resource is a portion of or all of the first time-frequency resources.

Further, the centralization device may select one or more target terminals from the group based on the resource size required by each terminal in the group to transmit the data and a scheduling priority of each terminal, and determine a second time-frequency resource corresponding to each target terminal. In an example, in a group, a terminal with a highest scheduling priority is a target terminal, or several terminals with higher scheduling priorities are target terminals.

Step 303: The centralization device may send the second indication information to a scheduling device of the target terminal. The second indication information indicates to schedule the target terminal. Correspondingly, the scheduling device receives the second indication information, and schedules the target terminal.

For example, when the first cell includes the target terminal, the centralization device sends the second indication information to a scheduling device for the first cell. The second indication information indicates to schedule the target terminal in the first cell. For another example, when the second cell includes the target terminal, the centralization device sends the second indication information to a scheduling device for the second cell. The second indication information indicates to schedule the target terminal in the second cell. Steps are similar for other cells. Details are not described again.

In an example, the second indication information includes identification information of the target terminal. In other words, the centralization device sends an identifier of the target terminal to the scheduling device, to notify a terminal that can be scheduled to the scheduling device. A terminal whose identifier is not sent is a terminal that cannot be scheduled. Optionally, the second indication information may further include a scheduling identifier.

Optionally, the second indication information may further indicate a second time-frequency resource corresponding to each target terminal, and the second time-frequency resource is used to schedule the target terminal. For example, the second indication information may further include information about the second time-frequency resource corresponding to each target terminal. In one group, different target terminals respectively correspond to different second time-frequency resources, so that the scheduling device schedules a plurality of target terminals on different time-frequency resources, and there is no interference or weak interference between the plurality of target terminals.

It should be noted that the centralization device and the scheduling device may be a same device or different devices. If a scheduling device of a target terminal is a centralization device, the centralization device may directly schedule the target terminal.

For example, when the first cell is a cell of the centralization device, the centralization device schedules a target terminal in the first cell. For another example, when the centralization device and the scheduling device for the second cell are different devices, the centralization device sends the second information to the scheduling device for the second cell. The second information indicates a target terminal in the second cell. The second cell is not a cell of the centralization device.

With reference to the example in Table 1, a target terminal selected from the first group is the terminal a1, a target terminal selected from the second group is the terminal b2, a target terminal selected from the third group is the terminal a6, a target terminal selected from the fourth group is the terminal b8, and a target terminal selected from the fifth group is the terminal a7. It is assumed that the cell a is a cell of the centralization device, and the cell b is not a cell of the centralization device. In this case, the centralization device schedules the terminal a1, the terminal a6, and the terminal a7, and the centralization device notifies the terminal b2 and the terminal b8 to a scheduling device of the cell b, so that the scheduling device of the cell b schedules the terminal b2 and the terminal b8.

Optionally, when the centralization device sends the second indication information to the scheduling device to indicate a target terminal to be scheduled in a cell, in addition to the target terminal, the second indication information may further indicate a terminal not to be scheduled. In this case, the scheduling identifier is a mandatory option. The scheduling identifier may be indicated by using 1 bit. For example, when 1 bit is 0, it indicates that scheduling is disallowed. When 1 bit is 1, it indicates that scheduling is allowed. In this way, the scheduling device may determine the target terminal based on the scheduling identifier.

The following specifically describes a grouping process. Specifically, the centralization device may determine a coefficient of interference between any two terminals based on the first information, and group terminals by using the coefficient of interference.

In an example, a coefficient $w_{i,j}$ of interference to a terminal $j$ caused by a terminal $i$ is:

$$w_{i,j} = \frac{|\boldsymbol{h}_{i,p}^{H}\boldsymbol{h}_{j,p}|^2}{\|\boldsymbol{h}_{i,p}\|^2 \|\boldsymbol{h}_{j,q}\|^2}$$

p represents a network device that serves the terminal $i$, $q$ represents a network device that serves the terminal $j$, and p and $q$ may be a same network device or different network devices. $\boldsymbol{h}_{i,p}$ represents a right singular vector $\boldsymbol{h}_{i,p}$ corresponding to a maximum singular value of a channel gain matrix ($\boldsymbol{H}_{i,p}$) from the network device p to the terminal $i$, and $\boldsymbol{h}_{i,p}$ may represent a strongest narrow beam direction from the network device p to the terminal $i$.

The coefficient of interference to the terminal $j$ caused by the terminal $i$ indicates estimated interference to the terminal $j$ caused by a downlink signal that is sent by the network device p to the terminal $i$.

In another example, a coefficient $w_{i,j}$ of interference to a terminal $j$ caused by a terminal $i$ is:

$$w_{i,j} = \frac{r_{i,p}^T r_{j,p}}{\left(\sum r_{i,p}\right)\left(\sum r_{j,q}\right)}$$

p represents a network device that serves the terminal $i$, $q$ represents a network device that serves the terminal $j$, and p and $q$ may be a same network device or different network devices. $\Sigma r_{i,p}$ represents a sum of all elements of a vector $r_{i,p}$.

In an example, the vector $r_{i,p}$ represents signal strength in each beam direction. Each element in the vector corresponds to signal strength in one beam direction. The signal strength may be obtained by measuring information such as the reference signal received power, received strength, or received quality, or may be obtained by calculating a channel gain matrix ($H_{i,p}$) from the network device p to the terminal $i$. A specific process belongs to the conventional technology. Details are not described again. If signal strength in some beam directions is less than a threshold, the signal strength in the beam direction may be set to zero.

In an example, the vector $r_{i,p}$ represents a signal strength identifier in each beam direction. Each element in the vector corresponds to a signal strength identifier in one beam direction. For example, the signal strength identifier is 0 or 1. When the signal strength is less than or equal to a threshold, the signal strength identifier is 0. Otherwise, the signal strength identifier is 1. The signal strength identifier may alternatively be another value such as 1 or 2, which is not limited. The first information may include an identifier of a beam whose signal strength is greater than or equal to a specified threshold, and/or an identifier of the beam whose signal strength is less than or equal to the specified threshold. The centralization device may determine a corresponding signal strength identifier based on identifiers of these beams.

It should be noted that the coefficient of interference to the terminal $j$ caused by the terminal $i$ is different from a coefficient of interference to the terminal $i$ caused by the terminal $j$. It is assumed that there are 10 terminals. When coefficients of interference between the 10 terminals are calculated, a 10* 10 matrix may be obtained. There are 100 coefficients of interference in the 10*10 matrix. A diagonal line of the 10*10 matrix is interference to the terminal $i$ caused by the terminal $i$, or interference to the terminal $j$ caused by the terminal $j$. A coefficient of interference is 1. Values of other positions other than a position of the diagonal line in the 10*10 matrix may indicate a coefficient of interference to another terminal caused by one terminal.

The following describes a process of grouping terminals based on the calculated coefficient of interference between the any two terminals.

Specifically, a spectral clustering method, a k-means method, and the like may be used for grouping.

For example, a terminal grouping problem is mathematically modeled as a graph segmentation problem: An interference relationship of the terminals is constructed as an undirected weighted graph $\mathcal{G}(\mathcal{N}, \mathcal{E})$, where $\mathcal{N}$ is a set of vertices of the graph $\mathcal{G}$, each vertex represents a to-be-scheduled terminal, and a terminal priority $p_i$ may be used as a point weight of a corresponding vertex $i$. $\varepsilon$ is a set of edges between two vertices of the graph $\mathcal{G}$, and a coefficient $w_{ij}$ of interference between corresponding terminals is used as an edge weight. The graph $\mathcal{G}(\mathcal{N}, \mathcal{E})$ is segmented into $M$ subgraphs {$C_1$, ... , $C_M$} without common vertices. A minimum sum of weighted cuts between the $M$ subrahs may be represented by the following objective function *minimize* $\sum_{m=1}^{M} \frac{\sum_{i \in C_n, j \in C_m} P_i P_j w_{ij}}{\sum_{i \in C_n} P_i \sum_{j \in C_m} P_j}$ .

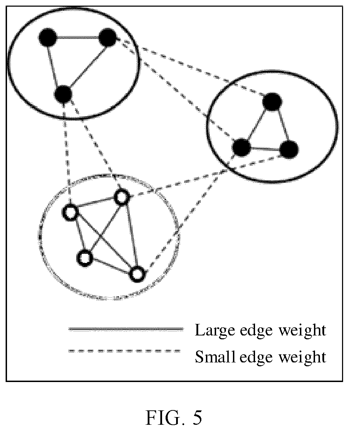

A grouping result is schematically shown in FIG. 5. Vertex sets in three circles represent three segmented subgraphs. Edge weights (solid lines) in a same subgraph are large, and edge weights (dotted lines) between different subgraphs are small. The objective function to achieve segmentation effect of the graph is not unique. For a process of grouping based on a plurality of values, refer to an existing technical solution. Details are not described herein again.

Because terminals are grouped in real time based on correlation between narrow beams, in this application, beam directions of downlink transmission between neighboring cells can be dynamically coordinated. This greatly reduces mutual interference between cells, and improves spectral efficiency of a system.

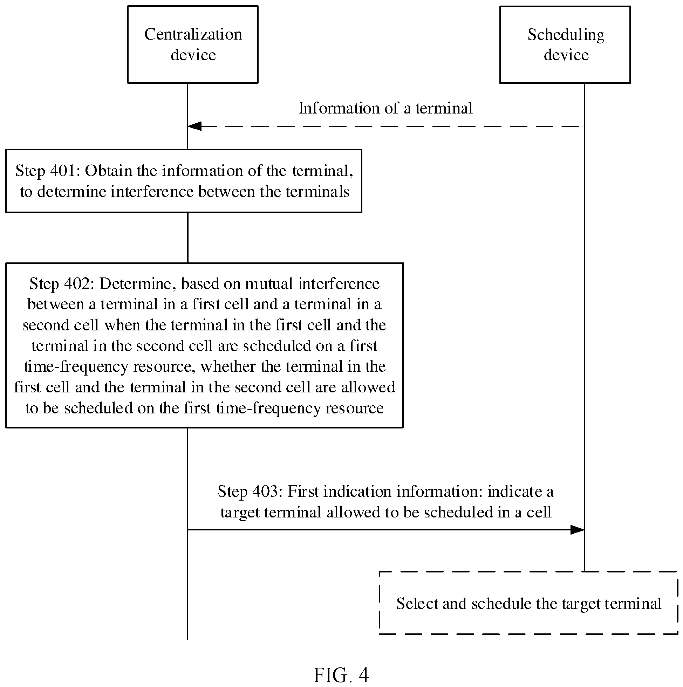

Next, refer to FIG. 4. A terminal scheduling process is described again. It should be noted that, in step 302, it is determined whether the terminal in the first cell and the terminal in the second cell are scheduled on the first time-frequency resource, and in step 402, it is determined whether a terminal in a first cell and a terminal in a second cell are allowed to be scheduled on a first time-frequency resource. It should be noted that "allowed to be scheduled" and "scheduled" are two different concepts. "Allowed to be scheduled" means that a centralization device first selects, as "scheduled" candidate terminals, some terminals from all terminals. "Scheduled" terminals are actually scheduled terminals, and are a part of terminals allowed to be scheduled.

FIG. 4 includes the following steps.

Step 401: The centralization device obtains respective first information of a plurality of terminals. The first information is used to determine mutual interference between any two terminals when the two terminals are scheduled on the first time-frequency resource. A process of step 401 is the same as a process of step 301. Details are not described again.

Step 402: The centralization device determines, based on mutual interference between the terminal in the first cell and the terminal in the second cell when the terminal in the first cell and the terminal in the second cell are scheduled on the first time-frequency resource, whether the terminal in the first cell and the terminal in the second cell are allowed to be scheduled on the first time-frequency resource.

In an example, an interference threshold is set, and a terminal allowed to be scheduled on the first time-frequency resource is determined based on the interference threshold. A process in this example is similar to step 302, but "scheduled" in step 302 is changed to "allowed to be scheduled". The following describes the process in detail.

As described above, the first cell includes one or more terminals to be scheduled, and the second cell includes one or more terminals to be scheduled. Any terminal 1 in the first cell and any terminal 2 in the second cell are used as an example to describe a specific example about whether the two terminals are allowed to be scheduled. When the terminal 1 and the terminal 2 are scheduled on the first time-frequency resource, and mutual interference between the terminal 1 and the terminal 2 is greater than or equal to the interference threshold, it is determined that the terminal 1 and the terminal 2 are disallowed to be scheduled on the first time-frequency resource. For example, the centralization device allows the terminal 1 to be scheduled, but does not allow the terminal 2 to be scheduled. For another example, the centralization device allows the terminal 2 to be scheduled, but does not allow the terminal 1 to be scheduled. When the terminal 1 and the terminal 2 are scheduled on the first time-frequency resource, and mutual interference between the terminal 1 and the terminal 2 is less than or equal to the interference threshold, it is determined that the terminal 1 and the terminal 2 are allowed to be scheduled on the first time-frequency resource.

When the plurality of terminals belong to three cells, four cells, or even more cells, whether the terminals are scheduled may still be determined based on the interference threshold. For example, for any two terminals, the centralization device may determine, based on mutual interference between the two terminals when the two terminals are scheduled on the first time-frequency resource, whether the two terminals are allowed to be scheduled on the first time-frequency resource. Further, based on comprehensive consideration of interference between the two terminals, the centralization device may determine, from the plurality of terminals, a terminal allowed to be scheduled on the first time-frequency resource.

Step 403: After determining the terminal allowed to be scheduled, the centralization device may deliver the terminal allowed to be scheduled to each scheduling device.

For example, the centralization device may further send first indication information to a scheduling device for a cell. Correspondingly, the scheduling device for the cell receives the first indication information from the centralization device. The first indication information indicates a terminal allowed to be scheduled in the cell. Further, the scheduling device may select, from the terminal allowed to be scheduled, a target terminal for scheduling. The scheduling device may use the terminal allowed to be scheduled as the target terminal, or may select, from the terminals allowed to be scheduled, one or more terminals with a highest or higher priority as the target terminals.

For example, when determining that the terminals allowed to be scheduled include the terminal in the first cell, the centralization device may send the first indication information to a scheduling device for the first cell. The first indication information indicates a terminal allowed to be scheduled in the first cell. For another example, when determining that the terminals allowed to be scheduled include the terminal in the second cell, the centralization device may send the first indication information to a scheduling device for the second cell. The first indication information indicates a terminal allowed to be scheduled in the second cell. Steps are similar for other cells. Details are not described again.

The first indication information may include an identifier of the terminal allowed to be scheduled. In other words, the centralization device sends the identifier of the terminal allowed to be scheduled to the scheduling device, to notify the terminal allowed to be scheduled to the scheduling device. A terminal whose identifier is not sent is a terminal disallowed to be scheduled. Optionally, the first indication information may further include a scheduling-allowed identifier.

In addition, when the centralization device sends the first indication information to the scheduling device for the cell to indicate the terminal allowed to be scheduled in the cell, in addition to the terminal allowed to be scheduled, the first indication information may further indicate a terminal disallowed to be scheduled. In this case, the scheduling-allowed identifier is a mandatory option. The scheduling-allowed identifier may be indicated by using 1 bit. For example, when 1 bit is 0, it indicates that scheduling is disallowed. When 1 bit is 1, it indicates that scheduling is allowed. In this way, the scheduling device may determine, based on a scheduling-allowed identifier corresponding to each terminal, the terminal allowed to be scheduled.

It should be noted that the centralization device and the scheduling device may be a same device or different devices. If a scheduling device of a terminal allowed to be scheduled is a centralization device, the centralization device does not need to send the first indication information to the terminal allowed to be scheduled.

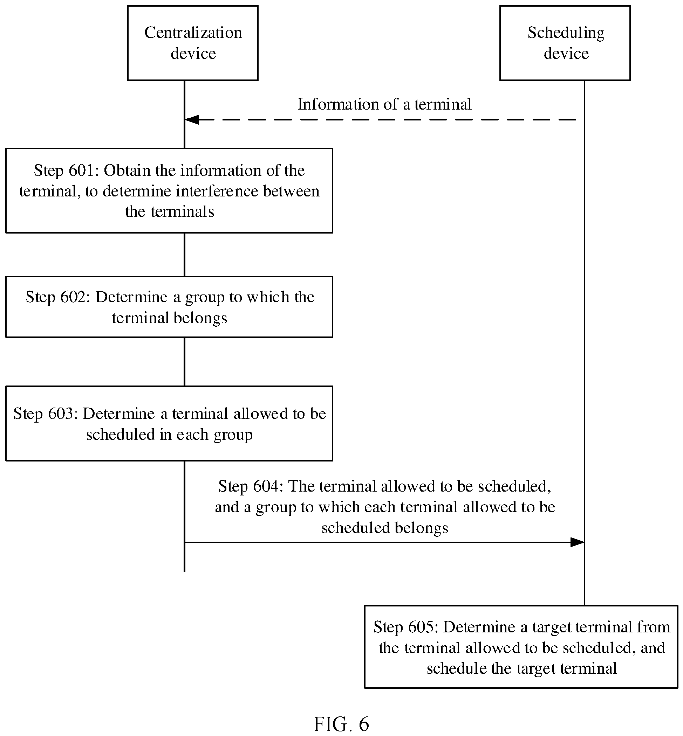

The following describes a terminal scheduling process with reference to FIG. 6. In an example of FIG. 6, terminals are grouped to determine a terminal allowed to be scheduled. Step 602 and step 603 in FIG. 6 are examples of the step 402. A difference between the example of FIG. 6 and an example of FIG. 3 lies in that: in the example of FIG. 3, a centralization device determines a terminal to be scheduled and a terminal not to be scheduled, and notify a terminal-level scheduling result to a scheduling device. Correspondingly, the scheduling device schedules the terminal based on a final scheduling result. In the example of FIG. 6, a centralization device groups terminals based on first information of the terminals. In a group, a terminal in only one cell is allowed to be scheduled, and a terminal in another cell is disallowed to be scheduled. The centralization device notifies a cell-level and coarse-grained scheduling selection result to the scheduling device, so that the scheduling device determines a terminal to be scheduled in a cell. In this manner, scheduling flexibility can be improved. Other technical details of the examples of FIG. 3 and FIG. 6 are the same and may be mutually referenced.

Step 601: The centralization device obtains respective first information of a plurality of terminals. The first information is used to determine mutual interference between any two terminals when the two terminals are scheduled on a first time-frequency resource. A process of step 601 is the same as a process of step 301 and a process of step 401. Details are not described again.

Step 602: The centralization device determines a group to which each terminal belongs. Specifically, the centralization device groups the plurality of terminals based on mutual interference between the plurality of terminals when the plurality of terminals are scheduled on the first time-frequency resource. The centralization device determines, based on grouping, a terminal allowed to be scheduled on the first time-frequency resource. For a grouping process, refer to the foregoing descriptions. Details are not described again.

Step 603: The centralization device determines a terminal allowed to be scheduled in each group.

Specifically, after grouping the terminals, the centralization device may perform the following processing on each group:

If the group includes a terminal in only one cell, the terminal in the cell in the group (that is, all terminals in the group) is allowed to be scheduled on the first time-frequency resource. For example, there are two cells: a first cell and a second cell. The group may include a terminal in only the first cell, or may include a terminal in only the second cell.

If the group includes terminals in a plurality of cells, a terminal in one cell in the group is allowed to be scheduled on the first time-frequency resource, and a terminal in another cell in the group is disallowed to be scheduled on the first time-frequency resource.

That the group includes terminals in two cells is used as an example for description. If the group includes one or more third terminals in the first cell and one or more fourth terminals in the second cell, the third terminals in the first cell in the group are allowed to be scheduled on the first time-frequency resource, and the fourth terminals in the second cell in the group are disallowed to be scheduled on the first time-frequency resource. Alternatively, the third terminals in the first cell in the group are disallowed to be scheduled on the first time-frequency resource, and the fourth terminals in the second cell in the group are allowed to be scheduled on the first time-frequency resource. Herein, a terminal in the group that is of a terminal to be scheduled in the first cell is defined as the third terminal, and a terminal in the group that is of a terminal to be scheduled in the second cell is defined as the fourth terminal. The third terminal may be some or all of the terminal to be scheduled in the first cell. The fourth terminal may be some or all of the terminal to be scheduled in the second cell.

The process of determining a terminal allowed to be scheduled may also be considered as a process of determining a category of each terminal. There are two categories herein: a first category and a second category. The first category indicates allowing to be scheduled, and the second category indicates not allowing to be scheduled.

In an example, when one group includes a terminal in one cell, the terminal in the cell is allowed to be scheduled. In other words, the terminal in the cell belongs to the first category. In this example, when a terminal in a cell is scheduled and there is no interference or weak interference to a terminal in another cell, the terminal in the cell is allowed to be scheduled. In the example in Table 1, there is only one cell a in the first group, and there is only one cell b in the second group. In this case, the terminals in both the cell a in the first group and the cell b in the second group are allowed to be scheduled. That is, the terminals belong to the first category (refer to Table 2 below).

In an example, when a group includes terminals in a plurality of cells, in the group, a terminal in only one cell is allowed to be scheduled (the terminal belongs to the first category), and a terminal in another cell is disallowed to be scheduled (the terminal belongs to the second category). In this example, because the terminal in only one cell is allowed to be scheduled, no inter-cell interference is generated. In the example in Table 1, the third group includes the terminals in the cell a and the terminals in the cell b. In this case, one of the cell a and the cell b may be selected as a cell in which there are terminals allowed to be scheduled, and the other is a cell in which there are terminals disallowed to be scheduled.

In a group, a cell in which there is a terminal allowed to be scheduled (that is, the terminal belongs to the first category) and a cell in which there is a terminal disallowed to be scheduled (that is, the terminal belongs to the second category) may be determined based on a scheduling priority of the terminal in the group, may be determined based on a quantity of terminals in each cell in the group, or may be determined in combination with the two.

In an example, whether a terminal in a cell is allowed to be scheduled may be determined based on a scheduling priority of each terminal in a group. In other words, whether the terminal belongs to the first category or the second category is determined. For example, in a group, each terminal in a cell in which there is a terminal with a highest priority is allowed to be scheduled (that is, the terminal belongs to the first category).

In an example, whether a terminal in a cell is allowed to be scheduled may be determined based on a quantity of terminals in each cell in a group. For example, in a group, each terminal in a cell with a largest quantity of terminals is allowed to be scheduled (that is, the terminal belongs to the first category).

In an example, whether a terminal in a cell is allowed to be scheduled may alternatively be determined based on a combination of a scheduling priority of each terminal in a group and a quantity of terminals in each cell. For example, a maximum quantity of terminals is considered first. When a quantity of terminals in at least two cells is the same, a scheduling priority of the terminal may be further considered. A cell in which there is a terminal with a highest scheduling priority is determined as a cell in which there is a terminal allowed to be scheduled. For another example, a scheduling priority of a terminal in a cell is first considered. When terminals with highest scheduling priorities in at least two cells have a same scheduling priority, a quantity of terminals in each cell may be further considered. A cell with a largest quantity of terminals is determined as a cell in which there is a terminal allowed to be scheduled.

Next, with reference to the example in Table 1, Table 2 provides a result of determining whether a terminal in each cell in each group is allowed to be scheduled (that is, a category into which the terminal is classified).

In the third group, the cell a includes the two terminals, and the cell b also includes the two terminals. In this case, whether a terminal is allowed to be scheduled may be determined based on a scheduling priority of the terminal. For example, in the third group, the terminal a2 in the cell a has a highest scheduling priority, the terminal b4 in the cell b has a highest scheduling priority, and the scheduling priority of the terminal a2 is higher than the scheduling priority of the terminal b4. In this case, in the third group, the terminals in the cell a are allowed to be scheduled, and the terminals in cell b are disallowed to be scheduled.

In the fourth group, if a quantity of terminals in the cell b is greater than a quantity of terminals in the cell a, the terminals in the cell a are disallowed to be scheduled, and the terminals in the cell b are allowed to be scheduled.

In the fifth group, if a quantity of terminals in the cell a is greater than a quantity of terminals in the cell b, the terminals in the cell a are allowed to be scheduled, and the terminals in the cell b are disallowed to be scheduled.

**Table 2**

|  | Cell a | Cell b |
|---|---|---|
| Allowed to be scheduled (a first category) | First group: a1, a5, and a8; Third group: a2 and a6; Fifth group: a4 and a7 | Second group: b1 and b2; Fourth group: b3, b5, and b8 |
| Not allowed to be scheduled (a second category) | Fourth group: a3 | Third group: b4 and b6; Fifth group: b7 |

Table 2 is merely an example, and does not constitute a limitation on this application.

In addition, when a scheduling priority is considered, a scheduling priority of each terminal in a cell may also be considered, instead of comparing the highest scheduling priority only. For example, a weight may be allocated to each scheduling priority, an average weight value of each cell may be determined, and a cell in which a terminal is allowed to be scheduled and a cell in which a terminal is disallowed to be scheduled in a group are determined based on the average weight value.

In another example, the centralization device may further determine, with reference to a quantity of terminals reported in each cell, whether a terminal in each cell is allowed to be scheduled.

Because cell-level and coarse-grained scheduling selection belongs to a centralized algorithm and provides global load information of each cell, a quantity of scheduled terminals in each cell can be adaptively adjusted to achieve inter-cell load balancing.

Further, optionally, the centralization device may further classify the first category in more detail, for example, classify the first category into a first subcategory and a second subcategory. For example, when one group includes a terminal in one cell, a first category of the terminal in the cell is the first subcategory. When one group includes terminals of plurality of cells, a first category of a terminal in one cell in the group is the second subcategory. For example, a1, a5, and a8 in the first group and b1 and b2 in the second group belong to the first subcategory. a2 and a6 in the third group, a4 and a7 in the fifth group, and b3, b5, and b8 in the fourth group belong to the second subcategory.

Herein, the first subcategory may also be understood as a non-interference category, the second subcategory may also be understood as a weak-interference category, and the second category may also be understood as a strong-interference category.

A category of a terminal is classified in more detail, so that a plurality of factors may be considered in an all-round way during terminal scheduling, to meet a current service requirement. For example, based on the three categories, the scheduling device may preferably schedule a terminal that belongs to the non-interference category, and then schedule a terminal that belongs to the weak-interference category. In some special cases, the scheduling device may also schedule a terminal that belongs to the strong-interference category. For another example, for the terminal that belongs to the non-interference category, data may be transferred at high power. For the terminal that belongs to the weak-interference category, data may be transferred at low power. For the terminal that belongs to the strong-interference category, scheduling may not be performed, or data may be transferred at lower power.

Step 604: After determining the terminal allowed to be scheduled in each group, the centralization device may deliver the terminal allowed to be scheduled to each scheduling device.

A difference between step 604 and step 403 lies in that, in step 604, first indication information may further indicate a group to which each terminal allowed to be scheduled in a cell belongs.

For example, the centralization device may further send the first indication information to a scheduling device for the cell. Correspondingly, the scheduling device for the cell receives the first indication information from the centralization device. The first indication information indicates a terminal allowed to be scheduled in the cell, and a group to which each terminal allowed to be scheduled in the cell belongs.

For example, when it is determined that the terminal allowed to be scheduled includes a terminal in the first cell, the centralization device may send the first indication information to a scheduling device for the first cell. Correspondingly, the scheduling device for the first cell receives the first indication information from the centralization device. The first indication information indicates a terminal allowed to be scheduled in the first cell, and a group to which each terminal allowed to be scheduled in the first cell belongs. For example, the first indication information includes an identifier of each terminal allowed to be scheduled in the first cell, and an identifier of a group to which each terminal belongs.

For example, when it is determined that the terminal allowed to be scheduled includes a terminal in the second cell, the centralization device may send the first indication information to a scheduling device for the second cell. Correspondingly, the scheduling device for the second cell receives the first indication information from the centralization device. The first indication information indicates a terminal allowed to be scheduled in the second cell, and a group to which each terminal allowed to be scheduled in the second cell belongs. For example, the first indication information includes an identifier of each terminal allowed to be scheduled in the second cell, and an identifier of a group to which each terminal belongs.

Optionally, the first indication information may further include a scheduling-allowed identifier.

Optionally, when the centralization device sends the first indication information to the scheduling device for the cell to indicate the terminal allowed to be scheduled in the cell, in addition to the terminal allowed to be scheduled, the first indication information may further indicate a terminal disallowed to be scheduled. In other words, the centralization device sends respective information of all terminals (including the terminal allowed to be scheduled and the terminal disallowed to be scheduled) in the cell to the scheduling device for the cell. In this case, the first indication information not only indicates a group to which the terminal belongs, but also indicates a category of the terminal, that is, to indicate whether the terminal is the terminal allowed to be scheduled (the first category) or the terminal disallowed to be scheduled (the second category). The first category and the scheduling-allowed identifier herein may be an identifier.

Correspondingly, the scheduling device receives the first indication information sent by the centralization device. The first indication information indicates a group to which the terminal belongs, and indicates a category of the terminal. The category is the first category or the second category. In this way, the scheduling device may select, based on the category of the terminal, the terminal allowed to be scheduled.

It should be noted that the centralization device and the scheduling device may be a same device or different devices. If a scheduling device of a terminal allowed to be scheduled is a centralization device, the centralization device does not need to send the first indication information to the terminal allowed to be scheduled.

Step 605: The scheduling device determines a target terminal from the terminal allowed to be scheduled. Further, the scheduling device schedules the target terminal.

The first cell is used as an example for description. Steps are similar for other cells.

The scheduling device for the first cell (may be the centralization device or a device other than a non-centralization device) determines a target terminal in the first cell. Further, the scheduling device schedules the target terminal in the first cell.

When there is one target terminal in the first cell, the target terminal may be any terminal allowed to be scheduled in the first cell.

Table 2 is used as an example. If the first cell is the cell a, terminals in the first cell include the terminal a1 to the terminal a8, and terminals allowed to be scheduled (the first category) in the first cell include: a1, a5, a8, a2, a6, a4, and a7. The target terminal scheduled in the first cell is any one of a1, a5, a8, a2, a6, a4, and a7. If the first cell is the cell b, terminals allowed to be scheduled (the first category) in the first cell are b1, b2, b3, b5, and b8. The target terminal scheduled in the first cell is any one of b1, b2, b3, b5, and b8.

When there are a plurality of target terminals in the first cell, the plurality of target terminals belong to different groups.

Table 2 is used as an example. In the cell a, the scheduling device may separately select one terminal from the first group, the third group, and the fifth group as the scheduled target terminal. For example, three target terminals are selected: a1, a2, and a4. For another example, three target terminals are selected: a1, a6, and a7. In the cell b, the scheduling device may separately select one terminal from the second group and the fourth group as the scheduled target terminal. For example, b1 and b3, or b1 and b5, or b8 and b2 are selected.

The scheduling device may determine, based on a scheduling priority of a terminal, the target terminal from the terminal allowed to be scheduled. In an example, in a group, a terminal with a highest scheduling priority in a terminal allowed to be scheduled is the target terminal, or several terminals with higher scheduling priorities are the target terminals. In this example, only one terminal in a first cell in one group is allowed to be scheduled. In this way, terminals with strong interference in the first cell can be prevented from being scheduled simultaneously, to reduce mutual interference between terminals in the first cell.

In the example of FIG. 6, the centralization device groups terminals based on interference between the terminals. In most cases, interference between terminals in one group is strong, and interference between terminals in different groups is weak. In a group, a terminal in only one cell is allowed to be scheduled, and a terminal in another cell is disallowed to be scheduled. In such a selection manner, terminals with strong interference between cells can be prevented from being scheduled simultaneously, to reduce mutual interference between the terminals in the cells. In addition, the centralization device can further notify a cell-level and coarse-grained scheduling selection result to the scheduling device, so that the scheduling device determines a terminal to be scheduled. This further improves scheduling flexibility.

In addition, based on the examples in FIG. 6 and FIG. 3, another terminal scheduling manner is provided.

In the example of FIG. 6, after the centralization device determines the terminal allowed to be scheduled, the centralization device may deliver the terminal allowed to be scheduled to each scheduling device. The scheduling device selects the target device from the terminal allowed to be scheduled.

In the another terminal scheduling manner, after determining a terminal allowed to be scheduled, a centralization device may select a target terminal from the terminal allowed to be scheduled. This process is the same as the process in the example of FIG. 6 in which the scheduling device selects the target device from the terminal allowed to be scheduled, but execution devices are different. Further, the centralization device may send second indication information to a scheduling device of the target terminal. The second indication information indicates to schedule the target terminal. Correspondingly, the scheduling device receives the second indication information, and schedules the target terminal. This is the same as step 303 in the example of FIG. 3. Details are not described again.

In the plurality of terminal scheduling methods provided in this application, the scheduling device schedules the plurality of target terminals on the first time-frequency resource, and no interference or weak interference is generated between the plurality of target terminals. This ensures communication performance. In addition, network devices can separately calculate, for the plurality of target terminals scheduled through spatial multiplexing, precoding weights for downlink transmission, to minimize, by using a precoding design method, such as zero-forcing transmission and maximum proportion transmission, mutual interference between the terminals for spatial multiplexing . The network device can send, by using the precoding weight obtained through calculation, data to the plurality of target terminals scheduled through spatial multiplexing. In a downlink data transmission phase, because each cell selects a target terminal for spatial multiplexing, and calculates a downlink precoding weight, inter-cell precoding calculation and sharing of to-be-transmitted data of the terminal do not need to be performed. Therefore, implementation complexity is low, overheads are low, and spectral efficiency is not lost. Real-time inter-cell terminal data exchange and complex joint signal processing are not required (for example, neighboring cell interference zero forcing, multi-cell joint data transmission). Therefore, implementation complexity is low.

The foregoing describes the method in embodiments of this application, and the following describes an apparatus in embodiments of this application. The method and the apparatus are based on a same technical concept. Because problem-resolving principles of the method and the apparatus are similar, mutual reference may be made to implementation of the apparatus and the method. Details are not described again.

In embodiments of this application, the apparatus may be divided into functional modules based on the foregoing method examples, for example, each functional module may be obtained through division based on each corresponding function, or two or more functions may be integrated into one processing module. The module may be implemented in a form of hardware, or may be implemented in a form of a software functional module. It should be noted that, in embodiments of this application, division into modules is an example and is merely logical function division. During specific implementation, there may be another division manner.

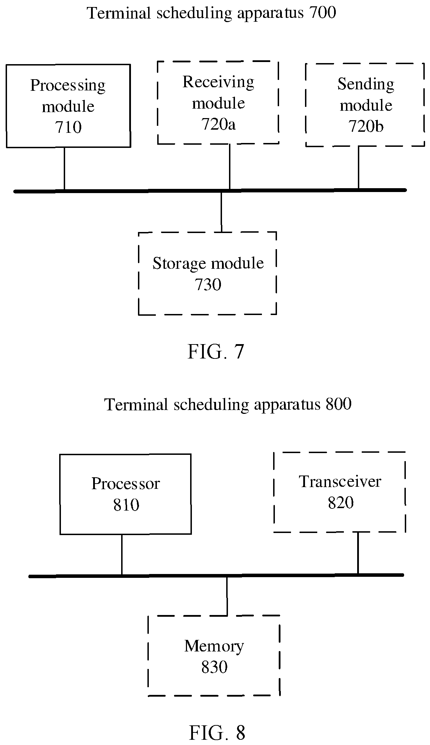

Based on a same technical concept as the foregoing method, FIG. 7 is a schematic diagram of a structure of a terminal scheduling apparatus 700 (the terminal scheduling apparatus may also be considered as a communication apparatus). The apparatus 700 may be a centralization device, or may be a chip or a functional unit used in the centralization device. The apparatus 700 has any function of the centralization device in the foregoing method. For example, the apparatus 700 can perform steps performed by the centralization device in the methods in FIG. 3, FIG. 4, and FIG. 6. The apparatus 700 may be a scheduling device, or may be a chip or a functional unit used in the scheduling device.

The apparatus 700 has any function of the scheduling device in the foregoing method. For example, the apparatus 700 can perform steps performed by the scheduling device in the methods in FIG. 3, FIG. 4, and FIG. 6.

The apparatus 700 may include a processing module 710. Optionally, the apparatus 700 further includes a receiving module 720a, a sending module 720b, and a storage module 730. The processing module 710 may be separately connected to the storage module 730, the receiving module 720a, and the sending module 720b. The storage module 730 may alternatively be connected to the receiving module 720a and the sending module 720b.

The receiving module 720a may perform a receiving action performed by the scheduling device or the centralization device in the foregoing method embodiments.

The sending module 720b may perform a sending action performed by the scheduling device or the centralization device in the foregoing method embodiments.

The processing module 710 may perform other actions than the sending action and the receiving action in actions performed by the scheduling device or the centralization device in the foregoing method embodiments.

In an example, the processing module 710 is configured to obtain respective first information of a plurality of terminals, where the plurality of terminals include at least one terminal in a first cell and at least one terminal in a second cell, the plurality of terminals are terminals to be scheduled on a first time-frequency resource, and the first information is used to determine mutual interference between any two terminals when the two terminals are scheduled on the first time-frequency resource; and determine, based on mutual interference between a terminal in the first cell and a terminal in the second cell when the terminal in the first cell and the terminal in the second cell are scheduled on the first time-frequency resource, whether the terminal in the first cell and the terminal in the second cell are allowed to be scheduled on the first time-frequency resource.

In an example, when the processing module 710 is configured to determine, based on mutual interference between the terminal in the first cell and the terminal in the second cell when the terminal in the first cell and the terminal in the second cell are scheduled on the first time-frequency resource, whether the terminal in the first cell and the terminal in the second cell are allowed to be scheduled on the first time-frequency resource, the processing module 710 is specifically configured to group the plurality of terminals based on mutual interference between the plurality of terminals when the plurality of terminals are scheduled on the first time-frequency resource. For any terminal, mutual interference between the terminal and at least one first terminal when the terminal and the at least one first terminal are scheduled on the first time-frequency resource is greater than mutual interference between the terminal and a second terminal when the terminal and the second terminal are scheduled on the first time-frequency resource. The terminal and the first terminal belong to a same group. The terminal and the second terminal belong to different groups. The following processing is performed on each group: if the group includes a terminal in only one cell, allowing to schedule the terminal in the cell in the group on the first time-frequency resource, where the cell is the first cell or the second cell; or if the group includes a third terminal in the first cell and a fourth terminal in the second cell, allowing to schedule the third terminal in the first cell in the group on the first time-frequency resource, and disallowing to schedule the fourth terminal in the second cell in the group on the first time-frequency resource; or disallowing to schedule the third terminal in the first cell in the group on the first time-frequency resource, and allowing to schedule the fourth terminal in the second cell in the group on the first time-frequency resource.

In an example, the sending module 720b is configured to send first indication information to a scheduling device for the first cell, where the first indication information indicates a terminal allowed to be scheduled in the first cell; and/or send the first indication information to a scheduling device for the second cell, where the first indication information indicates a terminal allowed to be scheduled in the second cell.

In an example, the processing module 710 is further configured to select at least one target terminal from each group of terminals allowed to be scheduled.

In an example, the sending module 720b is configured to send second indication information to a scheduling device for the first cell, where the second indication information indicates to schedule a target terminal in the first cell; and/or send the second indication information to a scheduling device for the second cell, where the second indication information indicates to schedule a target terminal in the second cell.

In an example, when the processing module 710 is configured to select the at least one target terminal from each group of terminals allowed to be scheduled, the processing module 710 is specifically configured to select, based on a scheduling priority of each terminal allowed to be scheduled, the at least one target terminal from each group of terminals allowed to be scheduled.

In an example, the storage module 730 may store a computer-executable instruction in a method performed by the terminal, so that the processing module 710, the receiving module 720a, and the sending module 720b perform the method performed by the scheduling device or the centralization device in the foregoing examples.

The receiving module 720a and the sending module 720b may alternatively be integrated and defined as a transceiver module.

The foregoing describes the apparatus used in the centralization device and the apparatus used in the scheduling device in embodiments of this application. The following describes possible product forms of the apparatus used in the centralization device and the apparatus used in the scheduling device. It should be understood that, any product in any form that has the feature of the apparatus used in the centralization device or the apparatus used in the scheduling the device (the apparatus is shown in FIG. 7) shall fall within the protection scope of this application. It should be further understood that the following descriptions are merely examples, and a product form of the apparatus used in the centralization device and a product form of the apparatus used in the scheduling device in this embodiment of this application are not limited.

As a possible product form, the apparatus may be implemented by a general bus architecture.

FIG. 8 provides a schematic block diagram of a terminal scheduling apparatus 800 (the terminal scheduling apparatus may also be considered as a communication apparatus). The apparatus 800 may be a centralization device, or may be a chip used in the centralization device. It should be understood that the apparatus has any function of the centralization device in the foregoing method. For example, the apparatus 800 can perform steps performed by the centralization device in the methods in FIG. 3, FIG. 4, and FIG. 6. The apparatus 800 may be a scheduling device, or may be a chip used in the scheduling device. It should be understood that the apparatus has any function of the scheduling device in the foregoing method. For example, the apparatus 800 can perform steps performed by the scheduling device in the methods in FIG. 3, FIG. 4, and FIG. 6.

The apparatus 800 may include a processor 810. Optionally, the apparatus 800 further includes a transceiver 820 and a memory 830. The transceiver 820 may be configured to receive a program instruction and transmit the program instruction to the processor 810. Alternatively, the transceiver 820 may be used by the apparatus 800 to communicate and interact with another communication device, for example, exchange control signaling and/or service data. The transceiver 820 may be a code and/or data read/write transceiver. Alternatively, the transceiver 820 may be a signal transmission transceiver between a processor and a transceiver. The processor 810 is electrically coupled to the memory 830.

For example, the memory 830 is configured to store a computer program. The processor 810 may be configured to invoke the computer program or instructions stored in the memory 830, to perform the method performed by the centralization device in the foregoing example, or perform, by using the transceiver 820, the method performed by the centralization device in the foregoing example.

The processing module 710 in FIG. 7 may be implemented by using the processor 810.

The receiving module 720a and the sending module 720b in FIG. 7 may be implemented by using the transceiver 820. Alternatively, the transceiver 820 includes a receiver and a transmitter. The receiver performs a function of the receiving module, and the transmitter performs a function of the sending module.

The storage module 730 in FIG. 7 may be implemented by using the memory 830.

In a possible product form, the apparatus may be implemented by using a general-purpose processor (the general-purpose processor may also be referred to as a chip or a chip system).

In a possible implementation, a general-purpose processor that implements an apparatus used in a centralization device or a scheduling device includes a processing circuit (the processing circuit may also be referred to as a processor). Optionally, the general-purpose processor further includes an input/output interface that is internally connected to and communicates with the processing circuit, and a storage medium (the storage medium may also be referred to as a memory). The storage medium is configured to store an instruction executed by the processing circuit, to perform the method performed by the centralization device or the scheduling device in the foregoing example.

The processing module 710 in FIG. 7 may be implemented by using a processing circuit.

The receiving module 720a and the sending module 720b in FIG. 7 may be implemented by using an input/output interface. Alternatively, the input and output interface includes an input interface and an output interface. The input interface performs a function of the receiving module, and the output interface performs a function of the sending module.

The storage module 730 in FIG. 7 may be implemented by using a storage medium.

In a possible product form, the apparatus in this embodiment of this application may alternatively be implemented by using the following components: one or more FPGA centralization devices (field programmable gate arrays), a PLD (programmable logic device), a controller, a state machine, gate logic, a discrete hardware component, any other suitable circuit, or any combination of circuits that can perform various functions described in this application.

An embodiment of this application further provides a computer-readable storage medium that stores a computer program. When the computer program is executed by a computer, the computer is enabled to perform the foregoing terminal scheduling method. In other words, the computer program includes instructions for implementing the foregoing terminal scheduling method.

An embodiment of this application further provides a computer program product, including computer program code. When the computer program code is run on a computer, the computer is enabled to perform the terminal scheduling method provided in the foregoing method embodiments.

An embodiment of this application further provides a communication system. The communication system includes a centralization device and a scheduling device that perform the foregoing terminal scheduling method.

In addition, the processor mentioned in embodiments of this application may be a central processing unit (central processing unit, CPU) or a baseband processor. The baseband processor and the CPU may be integrated together or separated from each other, or may be a network processor (network processor, NP) or a combination of the CPU and the NP. The processor may further include a hardware chip or another general-purpose processor. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (generic array logic, GAL) and another programmable logic device, a discrete gate or a transistor logic device, a discrete hardware component, or the like, or any combination thereof. The general-purpose processor may be a microprocessor, or the processor may be any conventional processor, or the like.

The memory mentioned in embodiments of this application may be a volatile memory or a nonvolatile memory, or may include a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. By way of example, and not limitation, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory described in this application is intended to include but is not limited to these memories and any memory of another proper type.

The transceiver mentioned in embodiments of this application may include a separate transmitter and/or a separate receiver, or a transmitter and a receiver may be integrated. The transceiver may operate according to an instruction of a corresponding processor. Optionally, the transmitter may correspond to a transmitter machine in a physical device, and the receiver may correspond to a receiver machine in the physical device.

A person of ordinary skill in the art may be aware that, the method steps and units that are described with embodiments disclosed in this specification can be implemented by electronic hardware, computer software, or a combination thereof. To clearly describe interchangeability between the hardware and the software, the foregoing has generally described steps and compositions of each embodiment based on functions. Whether the functions are performed by hardware or software depends on particular applications and design constraints of the technical solutions. A person of ordinary skill in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed systems, apparatuses, and methods may be implemented in other manners. For example, the foregoing apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, and may be located in one position, or may be distributed on a plurality of network units. Some or all of the units may be selected based on actual requirements to achieve the objective of the solutions of embodiments of this application.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium, and includes several instructions to enable a computer device (which may be a personal computer, a server, a network device, or the like) to perform all or some of the steps of the method described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

A person skilled in the art should understand that embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product implemented on one or more computer-usable storage media (including but not limited to a disk memory, a CD-ROM, an optical memory, and the like) that include computer-usable program code.

The term "and/or" in this application describes an association relationship between associated objects and indicates that there may be three relationships. For example, A and/or B may represent the following three cases: Only A exists, both A and B exist, and only B exists. The character "/" generally represents an "or" relationship between the associated objects. "A plurality of" in this application means two or more. In addition, it should be understood that, in the descriptions of this application, terms such as "first" and "second" are only for distinction and description, but cannot be understood as indicating or implying relative importance, or as indicating or implying an order.

This application is described with reference to the flowcharts and/or block diagrams of the method, the device (system), and the computer program product according to embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can indicate the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed by the computer or the another programmable device provide steps for implementing a specific function in one or more procedures in the flowcharts and/or in one or more blocks in the block diagrams.

Although some embodiments of this application have been described, a person skilled in the art can make changes and modifications to these embodiments once they learn the basic inventive concept. Therefore, the appended claims are intended to be construed as to cover the preferred embodiments and all changes and modifications falling within the scope of this application.

It is clear that a person skilled in the art can make various modifications and variations to embodiments of this application without departing from the scope of this application. In this way, this application is intended to cover these modifications and variations to embodiments of this application provided that they fall within the scope of protection defined by the following claims and their equivalent technologies of this application.

**Claims**

1. A terminal scheduling method, wherein the method comprises:

   obtaining, by a centralization device, respective first information of a plurality of terminals, wherein the plurality of terminals comprise at least one terminal in a first cell and at least one terminal in a second cell, the plurality of terminals are terminals to be scheduled on a first time-frequency resource, and the first information is used to determine mutual interference between any two terminals when the two terminals are scheduled on the first time-frequency resource; and
   determining, by the centralization device based on mutual interference between a terminal in the first cell and a terminal in the second cell when the terminal in the first cell and the terminal in the second cell are scheduled on the first time-frequency resource, whether the terminal in the first cell and the terminal in the second cell are allowed to be scheduled on the first time-frequency resource.

2. The method according to claim 1, wherein the determining, by the centralization device based on mutual interference between a terminal in the first cell and a terminal in the second cell when the terminal in the first cell and the terminal in the second cell are scheduled on the first time-frequency resource, whether the terminal in the first cell and the terminal in the second cell are allowed to be scheduled on the first time-frequency resource comprises:

grouping, by the centralization device, the plurality of terminals based on mutual interference between the plurality of terminals when the plurality of terminals are scheduled on the first time-frequency resource, wherein for any terminal, mutual interference between the terminal and at least one first terminal when the terminal and the at least one first terminal are scheduled on the first time-frequency resource is greater than mutual interference between the terminal and a second terminal when the terminal and the second terminal are scheduled on the first time-frequency resource, the terminal and the first terminal belong to a same group, and the terminal and the second terminal belong to different groups; and
performing, by the centralization device, the following processing on each group:

if the group comprises a terminal in only one cell, allowing to schedule the terminal in the cell in the group on the first time-frequency resource, wherein the cell is the first cell or the second cell; or
if the group comprises a third terminal in the first cell and a fourth terminal in the second cell, allowing to schedule the third terminal in the first cell in the group on the first time-frequency resource, and disallowing to schedule the fourth terminal in the second cell in the group on the first time-frequency resource; or disallowing to schedule the third terminal in the first cell in the group on the first time-frequency resource, and allowing to schedule the fourth terminal in the second cell in the group on the first time-frequency resource.

3. The method according to claim 1 or 2, further comprising:
sending, by the centralization device, first indication information to a scheduling device for the first cell, wherein the first indication information indicates a terminal allowed to be scheduled in the first cell; and/or sending, by the centralization device, the first indication information to a scheduling device for the second cell, wherein the first indication information indicates a terminal allowed to be scheduled in the second cell.

4. The method according to claim 3, wherein the first indication information further indicates a group to which a terminal allowed to be scheduled belongs.

5. The method according to claim 2, further comprising:

selecting, by the centralization device, at least one target terminal from each group of terminals allowed to be scheduled; and
sending, by the centralization device, second indication information to a scheduling device for the first cell, wherein the second indication information indicates to schedule a target terminal in the first cell; and/or sending, by the centralization device, the second indication information to a scheduling device for the second cell, wherein the second indication information indicates to schedule a target terminal in the second cell.

6. The method according to claim 5, the selecting, by the centralization device, at least one target terminal from each group of terminals allowed to be scheduled comprises:
selecting, by the centralization device based on a scheduling priority of each terminal allowed to be scheduled, the at least one target terminal from each group of terminals allowed to be scheduled.

7. The method according to claim 5 or 6, wherein the second indication information further indicates a second time-frequency resource corresponding to each target terminal, the second time-frequency resource is a portion of or all of the first time-frequency resource, and a plurality of target terminals in one group respectively correspond to different second time-frequency resources.

8. The method according to any one of claims 1 to 7, wherein the first information comprises one or more of the following: a channel state, beam signal strength, a received signal strength indicator, reference signal received power, reference signal received quality, an identifier of a beam whose signal strength is greater than or equal to a specified threshold, or an identifier of the beam whose signal strength is less than or equal to the specified threshold.

9. The method according to any one of claims 1 to 8, wherein the first information further comprises a scheduling priority.

10. A terminal scheduling apparatus, wherein the apparatus comprises:
a processing module, configured to obtain respective first information of a plurality of terminals, wherein the plurality of terminals comprise at least one terminal in a first cell and at least one terminal in a second cell, the plurality of terminals are terminals to be scheduled on a first time-frequency resource, and the first information is used to determine mutual interference between any two terminals when the two terminals are scheduled on the first time-frequency resource; and determine, based on mutual interference between a terminal in the first cell and a terminal in the second cell when the terminal in the first cell and the terminal in the second cell are scheduled on the first time-frequency resource, whether the terminal in the first cell and the terminal in the second cell are allowed to be scheduled on the first time-frequency resource.

11. The apparatus according to claim 10, wherein when determining, based on mutual interference between the terminal in the first cell and the terminal in the second cell when the terminal in the first cell and the terminal in the second cell are scheduled on the first time-frequency resource, whether the terminal in the first cell and the terminal in the second cell are allowed to be scheduled on the first time-frequency resource, the processing module is specifically configured to:

group the plurality of terminals based on mutual interference between the plurality of terminals when the plurality of terminals are scheduled on the first time-frequency resource, wherein for any terminal, mutual interference between the terminal and at least one first terminal when the terminal and the at least one first terminal are scheduled on the first time-frequency resource is greater than mutual interference between the terminal and a second terminal when the terminal and the second terminal are scheduled on the first time-frequency resource, the terminal and the first terminal belong to a same group, and the terminal and the second terminal belong to different groups; and
perform the following processing on each group:

if the group comprises a terminal in only one cell, allowing to schedule the terminal in the cell in the group on the first time-frequency resource, wherein the cell is the first cell or the second cell; or
if the group comprises a third terminal in the first cell and a fourth terminal in the second cell, allowing to schedule the third terminal in the first cell in the group on the first time-frequency resource, and disallowing to schedule the fourth terminal in the second cell in the group on the first time-frequency resource; or disallowing to schedule the third terminal in the first cell in the group on the first time-frequency resource, and allowing to schedule the fourth terminal in the second cell in the group on the first time-frequency resource.

12. The apparatus according to claim 10 or 11, further comprising:
a sending module, configured to send first indication information to a scheduling device for the first cell, wherein the first indication information indicates a terminal allowed to be scheduled in the first cell; and/or send the first indication information to a scheduling device for the second cell, wherein the first indication information indicates a terminal allowed to be scheduled in the second cell.

13. The apparatus according to claim 12, wherein the first indication information further indicates a group to which a terminal allowed to be scheduled belongs.

14. The apparatus according to claim 11, wherein the processing module is further configured to select at least one target terminal from each group of terminals allowed to be scheduled; and
the apparatus further comprises:
a sending module, configured to send second indication information to a scheduling device for the first cell, wherein the second indication information indicates to schedule a target terminal in the first cell; and/or send the second indication information to a scheduling device for the second cell, wherein the second indication information indicates to schedule a target terminal in the second cell.

15. The apparatus according to claim 14, wherein when selecting the at least one target terminal from each group of terminals allowed to be scheduled, the processing module is further configured to:
select, based on a scheduling priority of each terminal allowed to be scheduled, the at least one target terminal from each group of terminals allowed to be scheduled.

16. The apparatus according to claim 14 or 15, wherein the second indication information further indicates a second time-frequency resource corresponding to each target terminal, the second time-frequency resource is a portion of or all of the first time-frequency resource, and a plurality of target terminals in one group respectively correspond to different second time-frequency resources.

17. The apparatus according to any one of claims 10 to 16, wherein the first information comprises one or more of the following:
a channel state, beam signal strength, a received signal strength indicator, reference signal received power, reference signal received quality, an identifier of a beam whose signal strength is greater than or equal to a specified threshold, or an identifier of the beam whose signal strength is less than or equal to the specified threshold.

18. The apparatus according to any one of claims 10 to 17, wherein the first information further comprises a scheduling priority.

19. A communication apparatus, comprising a processor and a memory, wherein

the memory is configured to store computer program instructions; and
the processor is configured to execute some or all computer program instructions in the memory, and when the some or all computer program instructions are executed, the processor is configured to implement the method according to any one of claims 1 to 9.

20. A communication apparatus, comprising a processor, wherein
the processor is configured to execute some or all computer program instructions in a memory, and when the some or all computer program instructions are executed, the processor is configured to implement the method according to any one of claims 1 to 9.

21. A chip system, wherein the chip system comprises a processing circuit, and the processing circuit is coupled to a storage medium; and
the processing circuit is configured to execute some or all computer program instructions in the storage medium, and when the some or all computer program instructions are executed, the processing circuit is configured to implement the method according to any one of claims 1 to 9.

22. A computer-readable storage medium, configured to store a computer program, wherein the computer program comprises instructions for implementing the method according to any one of claims 1 to 9.

23. A computer program product, wherein the computer program product comprises computer program code, and when the computer program code is run on a computer, the computer is enabled to perform the method according to any one of claims 1 to 9.

FIG. 1a

FIG. 1b

FIG. 2a

FIG. 2b

FIG. 2c

```
┌─────────────────┐                          ┌─────────────────┐
│  Centralization │                          │   Scheduling    │
│      device     │                          │     device      │
└─────────────────┘                          └─────────────────┘
         │              Information of a terminal       │
         │◄ ─ ─ ─ ─ ─ ─ ─ ─ ─ ─ ─ ─ ─ ─ ─ ─ ─ ─ ─ ─ ─ │
┌────────┴──────────────────────────────────┐          │
│ Step 301: Obtain the information of the    │          │
│ terminal, to determine interference        │          │
│ between the terminals                      │          │
└────────┬──────────────────────────────────┘          │
┌────────┴──────────────────────────────────┐          │
│ Step 302: Determine, based on mutual       │          │
│ interference between a terminal in a first  │         │
│ cell and a terminal in a second cell when   │         │
│ the terminal in the first cell and the      │         │
│ terminal in the second cell are scheduled   │         │
│ on a first time-frequency resource, whether │         │
│ the terminal in the first cell and the      │         │
│ terminal in the second cell are scheduled   │         │
│ on the first time-frequency resource        │         │
└────────┬──────────────────────────────────┘          │
         │ Step 303: Second indication information:      │
         │  indicate a target terminal to be             │
         │       scheduled in a cell                      │
         │ ─────────────────────────────────────────────►│
         │                         ┌ ─ ─ ─ ─ ─ ─ ─ ─ ─ ─ ─ ─ ┐
         │                         │ Schedule the target      │
         │                         │       terminal           │
         │                         └ ─ ─ ─ ─ ─ ─ ─ ─ ─ ─ ─ ─ ┘
```

FIG. 3

FIG. 4

Large edge weight
Small edge weight

FIG. 5

```
┌─────────────────┐                          ┌─────────────────┐
│  Centralization │                          │   Scheduling    │
│     device      │                          │     device      │
└─────────────────┘                          └─────────────────┘
```

Information of a terminal

Step 601: Obtain the information of the terminal, to determine interference between the terminals

Step 602: Determine a group to which the terminal belongs

Step 603: Determine a terminal allowed to be scheduled in each group

Step 604: The terminal allowed to be scheduled, and a group to which each terminal allowed to be scheduled belongs

Step 605: Determine a target terminal from the terminal allowed to be scheduled, and schedule the target terminal

FIG. 6

Terminal scheduling apparatus 700

FIG. 7

Terminal scheduling apparatus 800

FIG. 8

## INTERNATIONAL SEARCH REPORT

| | International application No. |
| --- | --- |
| | **PCT/CN2021/127605** |

### A. CLASSIFICATION OF SUBJECT MATTER

H04W 72/12(2009.01)i

According to International Patent Classification (IPC) or to both national classification and IPC

### B. FIELDS SEARCHED

Minimum documentation searched (classification system followed by classification symbols)

H04W; H04Q

Documentation searched other than minimum documentation to the extent that such documents are included in the fields searched

Electronic data base consulted during the international search (name of data base and, where practicable, search terms used)

CNABS; CNTXT; EPTXT; USTXT; WOTXT; DWPI; 3GPP: 终端, 用户设备, 干扰, 调度, 小区, 选择, 组, 集合, UE, cellular, interference, terminal, schedul, cell, select, group, set

### C. DOCUMENTS CONSIDERED TO BE RELEVANT

| Category* | Citation of document, with indication, where appropriate, of the relevant passages | Relevant to claim No. |
| --- | --- | --- |
| X | CN 103139796 A (HUAWEI TECHNOLOGIES CO., LTD.) 05 June 2013 (2013-06-05) description, paragraphs [0018]-[0082], and figures 1-3 | 1, 3-4, 8-10, 12-13, 17-23 |
| X | CN 101282566 A (ZTE CORPORATION) 08 October 2008 (2008-10-08) description page 5 last paragraph - page 10 paragraph 3 | 1, 3-4, 8-10, 12-13, 17-23 |
| A | CN 108352974 A (BEIJING XIAOMI MOBILE SOFTWARE CO., LTD.) 31 July 2018 (2018-07-31) entire document | 1-23 |
| A | CN 108495335 A (COMBA TELECOM SYSTEMS (CHINA) CO., LTD. et al.) 04 September 2018 (2018-09-04) entire document | 1-23 |
| A | US 2010165971 A1 (SAMSUNG ELECTRONICS CO., LTD.) 01 July 2010 (2010-07-01) entire document | 1-23 |
| A | CN 103931258 A (QUALCOMM INC.) 16 July 2014 (2014-07-16) entire document | 1-23 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **10 January 2022** | **19 January 2022** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

International application No.

**PCT/CN2021/127605**

| Patent document cited in search report | | | Publication date (day/month/year) | Patent family member(s) | | | Publication date (day/month/year) |
|---|---|---|---|---|---|---|---|
| CN | 103139796 | A | 05 June 2013 | WO | 2013078966 | A1 | 06 June 2013 |
| | | | | US | 2014256344 | A1 | 11 September 2014 |
| | | | | US | 9426695 | B2 | 23 August 2016 |
| | | | | EP | 2775753 | A1 | 10 September 2014 |
| | | | | EP | 2775753 | A4 | 22 October 2014 |
| | | | | EP | 2775753 | B1 | 08 January 2020 |
| CN | 101282566 | A | 08 October 2008 | WO | 2008119216 | A1 | 09 October 2008 |
| | | | | CN | 101282566 | B | 26 October 2011 |
| | | | | JP | 2010524306 | A | 15 July 2010 |
| | | | | JP | 5189160 | B2 | 24 April 2013 |
| CN | 108352974 | A | 31 July 2018 | EP | 3672344 | A1 | 24 June 2020 |
| | | | | EP | 3672344 | A4 | 12 August 2020 |
| | | | | WO | 2019047085 | A1 | 14 March 2019 |
| | | | | US | 2020205161 | A1 | 25 June 2020 |
| CN | 108495335 | A | 04 September 2018 | | None | | |
| US | 2010165971 | A1 | 01 July 2010 | KR | 20100070482 | A | 28 June 2010 |
| | | | | KR | 101532227 | B1 | 07 July 2015 |
| | | | | US | 9055591 | B2 | 09 June 2015 |
| CN | 103931258 | A | 16 July 2014 | EP | 2781134 | A1 | 24 September 2014 |
| | | | | EP | 2781134 | B1 | 02 March 2016 |
| | | | | KR | 20140094004 | A | 29 July 2014 |
| | | | | KR | 101579151 | B1 | 22 December 2015 |
| | | | | US | 2013121186 | A1 | 16 May 2013 |
| | | | | US | 9049730 | B2 | 02 June 2015 |
| | | | | JP | 2015502699 | A | 22 January 2015 |
| | | | | JP | 5852258 | B2 | 03 February 2016 |
| | | | | IN | 2631CHN2014 | A | 07 August 2015 |
| | | | | WO | 2013074350 | A1 | 23 May 2013 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202011238334